# EUROPEAN PATENT SPECIFICATION

(11) **EP 1 863 251 B1**
(45) Date of publication and mention of the grant of the patent: **24.08.2011**
(21) Application number: 06011019.4
(22) Date of filing: 29.05.2006
(51) Int. Cl.: H04L 29/06

(54) **Method and apparatus for mobile IPV6 simultaneous location privacy and route optimization**
Verfahren und Vorrichtung zur Routen-Optimierung in Mobile IPv6 ohne Bekanntgabe des Aufenthaltsortes
Procédé et dispositif pour optimiser l'acheminement dans un système mobile IPv6 en maintenant la confidencialité des emplacements

(43) Date of publication of application: 05.12.2007
(73) Proprietor: Panasonic Corporation, Kadoma-shi Osaka 571-8501 (JP)
(72) Inventor: Weniger, Kilian, Dr., 63225 Langen (DE); Bachmann, Jens, 63225 Langen (DE)
(74) Representative: Grünecker, Kinkeldey, Stockmair & Schwanhäusser Anwaltssozietät

(56) References cited:
- EP-A1- 1 442 579
- US-B1- 6 407 988
- RONG ZHENG ET AL: "A case for mobility support with temporary home agents" COMPUTER COMMUNICATIONS AND NETWORKS, 2001. PROCEEDINGS. TENTH INTERNATIONAL CONFERENCE ON 15-17 OCT. 2001, PISCATAWAY, NJ, USA,IEEE, 15 October 2001 (2001-10-15), pages 226-233, XP010562099 ISBN: 0-7803-7128-3

## Description

### Field of the Invention

The invention relates to optimized routing and location privacy in mobile packet-based communication networks.

This invention describes a method and system that enables a Mobile IPv6 (Internet Protocol version 6) mobile node to hide its location from a correspondent node and at the same time provides optimized routing of data packets; a mobile node enabled to hide its location from a correspondent node and at the same time provide optimised routing of data packets; and a computer readable medium that enables a Mobile IPv6 (Internet Protocol version 6) mobile node to hide its location from a correspondent node and at the same time provides optimized routing of data packets.

### Technical Background

Communications systems evolve more and more towards an Internet Protocol (IP)-based network. They consist of many interconnected networks, in which speech and data is transmitted from one terminal to another terminal in pieces, so-called packets. Those packets are routed to the destination by routers in a connection-less manner. Therefore, packets consist of IP header and payload information and the header comprises among other things source and destination IP address. For scalability reasons an IP network uses a hierarchical addressing scheme. Hence, an IP address does not only identify the corresponding terminal, but additionally contains location information about this terminal. With additional information provided by routing protocols, routers in the network are able to identify the next router towards a specific destination.

If a terminal is mobile, from now on called Mobile Node (MN), and moves between subnets, it must change its IP address to a topological correct one because of the hierarchical addressing scheme. However, since connections on higher-layers such as TCP connections are defined with the IP addresses (and ports) of the communicating nodes, the connection breaks if one of the nodes changes its IP address, e.g., due to movement.

Mobile IPv6 [D. Johnson, C. Perkins, J. Arkko, "Mobility Support in IPv6", IETF RFC 3775, June 2004] is an IP-based mobility protocol that enables MNs to move between subnets in a manner transparent for higher layers and applications, i.e. without breaking higher-layer connections. Therefore, a MN has two IP addresses configured: a Care-of-Address (CoA) and a Home Address (HoA). The MN's higher layers use the HoA for communication with the communication partner (destination terminal), from now on called Corresponding Node (CN). This address does not change and serves the purpose of identification of the MN. Topologically, it belongs to the Home Network (HN) of the MN. In contrast, the CoA changes on every movement resulting in a subnet change and is used as the locator for the routing infrastructure. Topologically, it belongs to the network the MN is currently visiting. One out of a set of Home Agents (HA) located on the home link maintains a mapping of the MN's CoA to MN's HoA and redirects incoming traffic for the MN to its current location. Reasons for having a set of HAs instead of a single HA are redundancy and load balancing.

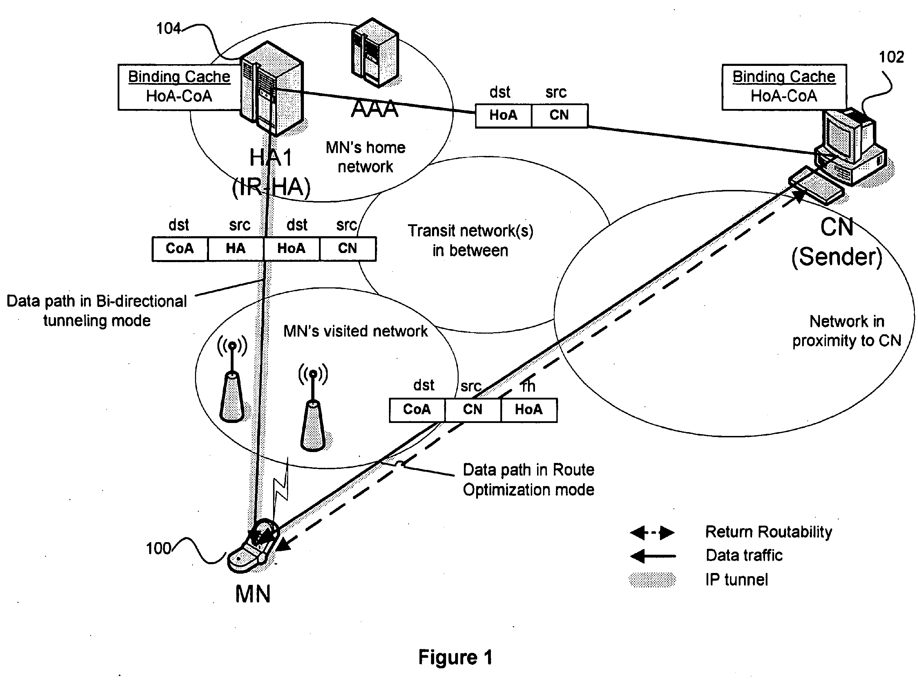

Mobile IPv6 currently defines two modes of operation: bi-directional tunnelling and route optimization. If bi-directional tunnelling is used, data packets sent by the CN and addressed to the HoA of the MN are intercepted by the HA in the HN and tunnelled to CoA of the MN. Data packets sent by the MN are reverse tunnelled to the HA, which decapsulates the packets and sends them to the CN. For this operation, only the HA must be informed about the CoA of the MN. Therefore, the MN sends Binding Update (BU) messages to the HA. These messages are sent over an IPsec security association and thus are authenticated and integrity protected. Since the CN is not aware of the CoA of the MN, it cannot derive the location of the MN and, thus, location privacy is provided. However, if the MN is far away from the home network and the CN is close to the MN, the communication path is unnecessarily long, resulting in inefficient routing and high packet delays (see Figure 1).

Recently, Mobile IPv6 has been extended to enable MNs to dynamically bootstrap with HAs [G. Giaretta, J. Kempf, V. Devarapalli, "Mobile IPv6 bootstrapping in split scenario", draft-ietf-mip6-bootstrapping-split-02.txt, March 2006]. Bootstrapping includes discovering a HA, configuring a corresponding HoA, and setting up IPsec security associations with this HA. Since manual configuration of mobile nodes is neither practical and nor scalable, it can be assumed that Mobile IPv6 will be deployed with the bootstrapping extension, especially in large scale deployments. The bootstrapping extensions enables a MN to bootstrap with a local HA to optimize the route in bi-directional tunnelling mode. However, this potentially breaks location privacy support, since the HoA (which is usually known by CN) now contains location information. For instance, if the CN knows that the HA is local to the MN (e.g., it is the operator's policy to bootstrap with local HAs), it can deduce the MN's location based on the MN's HoA. Furthermore, changing the HA by bootstrapping requires changing the HoA, which means that ongoing data sessions would break. Hence, route optimization of ongoing data sessions is not supported.

Note that different aspects of location privacy can be distinguished. The one this invention aims at is hiding the MN's location to the CN. Other aspects are hiding the location to eavesdroppers or preventing tracking of the MN's location.

The route optimization mode can prevent the inefficiency of bi-directional tunnelling mode by using the direct path between CN and MN (see Figure 1). Therefore, the MN sends BU messages to the CN, which then is able to directly send data packets to the MN (a type 2 routing header is used to send the packets on the direct path). Of course, the CN has to implement Mobile IPv6 route optimization support. To authenticate the BU message, the MN and the CN perform a so-called return routability procedure, which tests the reachability of the MN at the HoA and CoA and generates a shared session key (see below). However, since the CN learns the CoA of the MN by means of the BU message, it can derive its location, i.e. location privacy is not provided.

In the following, prior art documents that can provide route optimization or location privacy to some extent are discussed and the drawbacks of those solutions shown.

HMIP [Hesham Soliman, Claude Catelluccia, Karim El Malki, Ludovic Bellier, "Hierarchical Mobile IPv6 mobility management (HMIPv6)", IETF RFC4140, August 2005] was developed to reduce the latency and signalling overhead occurring due to sending BU messages to a (potentially far away) HAs. It is proposed to handle the mobility partly locally. Therefore, a hierarchy of Mobility Anchor Points (MAP) is introduced in the visited network. The MN only needs to register its CoA with the local MAP. An additional CoA, the so-called Regional CoA (RCoA), is obtained from the MAP's subnet and used by the MAP to hide the MN's mobility within the MAP's region from the HA (or the CN in case of route optimization). Furthermore, MN can start Route Optimization mode using the RCoA as CoA. Hence, some support for simultaneous route optimization and location privacy can be provided, but since CN still knows the RCoA and hence the MAP region the MN is currently located in, location privacy support is very limited.

AREC [WO2004055993; as well as G. Krishnamurthi, H. Chaskar, R. Siren, "Providing End-to-End Location Privacy in IP-based Mobile Communication", IEEE WCNC, March 2004] requires modification of every Access Router (AR) of every visited network. Binding information is sent from HAs to ARs of the CN and MN, respectively, and data packets are tunnelled between the ARs of MN and CN without involvement of the HAs. This way, the direct, i.e. shortest, route between MN and CN is used and location privacy is supported. In WO2004010668 a very similar approach is presented. However, security issues arise due to the dissemination of binding information to ARs and the distribution of binding information from the HAs to the ARs requires a new complex protocol, which would have to be standardized and which would have to be universally deployed to be useful.

ORC [Ryuji Wakikawa, "Optimized Route Cache Protocol (ORC)", Internet Draft draft-wakikawa-nemo-orc-01.txt, October 2004] was developed for route optimization in mobile networks (NEMO) and requires modifications to edge routers of visited networks, including the provision of binding information. The MN tunnels data packets to the edge router of CN's current network (assuming that CN is mobile) and the CN can tunnel data packets to the edge router of MN's current visited network. To be able to tunnel the packets to the edge routers, each node needs to know the IP address of the correspondent edge router. Security issues arise and a new protocol has to be standardize, which would have to be universally deployed to be useful. Furthermore, simultaneous location privacy and optimized routing is only supported, if the modified edge router is deployed in CN's network and if this router is located on the direct path between MN and CN.

GlobalHAHA [P. Thubert, R. Wakikawa, V. Devarapalli, "Global HA to HA protocol", IETF Internet Draft draft-thubert-nemo-global-haha-00, October 2004] allows the distribution of HAs in the Internet that are usually bound to the home link by letting multiple HAs advertise routes to the home network prefix from different topological locations. A MN can bind to the closest HA, which serves as proxy HA, resulting in an optimized route. Location privacy is given, if bi-directional tunnelling is used. Hence, simultaneous route optimization and location privacy is provided. However, if all visited network advertise routes to all other networks (all being home networks for some MNs), routing scalability issues may arise, since the address hierarchy is basically not given anymore. Furthermore, the distributed home network must manually be configured as such. A secure on-demand configuration is not supported and would require a new complex protocol, which would need to be standardized and would have to be universally deployed to be useful.

In WO03041358 so-called Location Privacy Agents (LPA) and Location Privacy Servers (LPS) are introduced in every network. The MN sends a location privacy request message to its LPA, which then selects an LPA that is close to the CN. The address of this LPA is then given to the MN, which then sends a BU message to this LPA. Hence, the approach is similar to the ORC approach: since the LPA is close to CN's network, it knows the location of CN to some extend, which breaks location privacy support if the CN is mobile. Moreover, this solution would require a new signalling protocol and introduces new entities.

In US2005041675 and WO2004043010 location privacy is achieved by cryptographically modified prefixes of IP addresses. Since the prefix is usually used by a router to route IP packets, this approach requires the modification of all routers in the Internet, which is not a realistic option, or can only provide very limited location privacy.

In WO03044626, multicast addresses are used as CoA. Since they do not include any location information, location privacy support is given even in route optimization mode. However, this solution does not scale with the number of MNs, since a large-scale deployment would result in a flat routing in the internet.

Mechanisms such as proposed in US20040236937 only deal with hiding the MN's identity and hence also location from eavesdroppers. It cannot hide the MN's location from CN and hence doesn't solve the given problem.

In J. Zhang and D. Pearce ("Agent-Based Return Routability Test for Mobile IPv4 Route Optimization", IETF Internet Draft draft-zhang-mobopts-agent-mip4rr-00.txt, August 2005), it is proposed to adopt the MIPv6 route optimization scheme for MIPv4 route optimization. A Correspondent Agent (CA) is introduced that proxies the CN in terms of return routability. This way the CN implementation does not need to be modified and data packets can directly be tunnelled between MN and CA. A side effect of the CA is that MN's location is hidden from CN. This approach is similar to ORC. Hence, security issues arise, a new protocol has to be standardized, and a CA has to be introduced. Furthermore, simultaneous location privacy and optimized routing is only supported, if a CA is deployed in CN's network and if this CA is located on the direct path between MN and CN.

Finally, C. Castelluccia, F. Dupont and G. Montenegro ("A Simple Privacy Extension for Mobile IPv6", draft-dupont-mip6-privacyext-02.txt, July 2005) propose to replace the HoA by a Temporary Mobile Identifier (TMI). If the MN initiates the session, it can thus hide the HoA from CN and only reveal the TMI. Although CN learns the MN's CoA, it doesn't reveal the MN's location since CN doesn't know the real identity corresponding to the CoA. However, for the CN to be able to initiate communication with the MN, the CN must know the MN's HoA and hence location privacy is not provided in such scenarios (note that the HoA cannot be changed to keep higher-layer sessions alive).

A mechanism that provides both location privacy and optimized routing is certainly desirable, since interactive applications such as VolP require short packet delays. The mechanism should require only small changes to Mobile IPv6 message formats and implementations of Mobile IPv6 entities. Furthermore, it should support scenarios where the MN initiates the communication session as well as where the CN initiates the session.

The main problem to be solved is to hide the MN's location from CN and at the same time provide optimized routing of data packets. This shall be possible for communication sessions initiated by MN as well as by CN and shall only require minimal changes to Mobile IPv6. Moreover, location privacy support shall be unlimited, i.e., it shall neither be possible for the correspondent node to derive the link, nor the network or the domain, where the mobile node is currently located.

Rong Zhen et al: "A case for mobility support with temporary home agents2 Computer Communications and Networks, 200. Proceedings 10th International Conference on 15-17 October 2001, Piscataway, NJ, USA, IEEE, October 15, 2001, pages 226-233, proposes a method to achieve optimized routing for Mobile IPv4. It is assumed that most of the time, the mobile node does not move far away from the point where it is powered on. The basic idea is that the mobile node utilizes a local temporary, home agent and a local home address for communication with correspondent nodes. The local home agent can be discovered by special broadcast messages (agent advertisements) advertised by access routers.

EP 1,442,579 B1* relates to a method system and system entities for providing location privacy in communication networks.

### Summary of the invention

The present invention has been made in consideration of the above situation and has as its object to hide a mobile node's location from a correspondent node and at the same time provide optimised routing of data packets to this correspondent node.

This object is solved by the subject matter of the independent claims. Advantageous embodiments of the invention are subject matters to the dependent claims.

### Brief Description of the Figures

Further features and advantages will become apparent from the following and more particular description of the various embodiments of the invention as illustrated in the accompanying drawings, wherein:
Figure 1 shows the prior art data path and addresses in IP headers in Mobile IPv6 Bi-directional tunneling and Route Optimization mode, respectively;
Figure 2 depicts the data path and addresses in IP headers for MN-initiated session if MN sends data according to an embodiment of the invention;
Figure 3 shows the data path and addresses in IP headers for MN-initiated session if CN sends data according to an embodiment of the invention;
Figure 4 shows the data path and addresses in IP headers for CN-initiated session if CN sends data according to an embodiment of the invention;
Figure 5 shows the data path and addresses in IP headers for CN-initiated session if MN sends data according to an embodiment of the invention;
Figure 6 shows the data path if anchor is moved from one local HA to another local HA according to an embodiment of the invention;
Figure 7 shows the data path if anchor is moved from one HA to another HA, each registered with a different network interface according to an embodiment of the invention;
Figure 8 is a block diagram of the MN initiated process according to an embodiment of the invention; and
Figure 9 is a block diagram of the CN initiated process according to an embodiment of the invention.

### Detailed Description of the Invention

The following paragraphs will describe various embodiments of the invention including the procedure to solve the given problem, described for MN-initiated and CN-initiated sessions, respectively.

For exemplary purposes only, most of the embodiments are outlined in relation to a Mobile IPv6 communication system, and the terminology used in the subsequent sections mainly relates to the Mobile IPv6 terminology. However, the used terminology and the description of the embodiments with respect to a Mobile IPv6 architecture is not intended to limit the principles and ideas of the inventions to such systems.

Also, the detailed explanations given in the technical background section above are merely intended to better understand the mostly Mobile IPv6 specific exemplary embodiments described in the following, and should not be understood as limiting the invention to the described specific implementations of processors and functions in a Mobile IPv6 network.

The basic approach for location privacy followed by this invention is to hide the MN's CoA from CN. The first key idea of this invention is to discover and bootstrap with a HA, which is located close to the direct path between MN and CN, and use this HA in bi-directional tunnelling mode when communicating with the corresponding CN for providing optimized routing. In the MN-initiated scenario, this already solves the problem of simultaneous location privacy and optimized routing.

In the more challenging CN-initiated scenario this is not enough, since the MN usually does not know in advance that a CN will start sending data to the MN and which CN will do so. To solve the problem in this scenario, the main idea is to permanently keep being registered with a first HA and disclose the corresponding HoA to be reachable and be able to receive packets from CNs and, upon receiving first packets of a new communication session, bootstrap with a second HA and obtain a second HoA as described below to achieve optimized routing. In order to move the Mobile IP data session from the first HA to the second HA, the MN executes the route optimization mode over the bi-directional tunnel to the second HA and the CoA in route optimization mode is set to the second HoA. Using route optimization mode over bi-directional tunnelling and using a HoA (corresponding to the second HA) as CoA in CoT/CoTi/BU (Care-of Test/Care-of Test init/Binding Update) messages to CN is considered to be the second key idea of this invention.

This idea can also be used for purposes other than location privacy, such as HA load balancing, optimization of bootstrapping and multi-homing scenarios.

### MN-initiated communication sessions

To prevent revealing its CoA to CN and provide location privacy, the MN uses bi-directional tunnelling mode for communication with the CN. If the MN initiates the communication with the CN, it is free to choose a HA and a corresponding HoA for the communication with the CN, if it has multiple HAs and HoAs available. The idea to provide optimized routing is to discover and bootstrap with a HA which is located close to the direct path between MN and CN and use this HA in bi-directional tunnelling mode for communication with the CN.

Since a HA close to MN would add location information to the HoA and hence may break location privacy, the new HA should be rather close to CN. Another advantage of a HA located close to the CN is that it provides a short route even in the presence of heavy MN mobility. Since such a HA is primarily used for optimized routing with a specific CN, we call it "Route Optimization" (RO)-HA.

Bootstrapping is done as described in G. Giaretta, J. Kempf and V. Devarapalli ("Mobile IPv6 bootstrapping in split scenario", draft-ietf-mip6-bootstrapping-split-02.txt, March 2006) summarized above. The MN may be registered with one or more HAs before bootstrapping with the RO-HA.

One way to discover a RO-HA would be to use location-dependent HA discovery as mentioned in G. Giaretta, J. Kempf and V. Devarapalli ("Mobile IPv6 bootstrapping in split scenario", draft-ietf-mip6-bootstrapping-split-02.txt, March 2006). E.g., if the CN's host name is "cn.eu.panasonic.com", the MN may query DNS for "ha.eu.panasonic.com" or "_mip6._ipv6.eu.panasonic.com" to obtain a RO-HA address, in this case an address of an HA that is located in the same domain as the CN.

A second way to discover a RO-HA address is to use anycast-based HA discovery such as "Dynamic Home Agent Address Discovery (DHAAD)" as specified in RC3775. The MN would therefore send a request to an anycast address, which it constructs based on the CN's address prefix and a HA in CN's network would reply to this requests.

A third way is to introduce a dedicated network entity (server) that is able to map a CN address to one or more addresses of HAs which are located close to this CN (i.e., in the same or nearby domain or subnet) or a tuple of MN and CN address to one or more addresses of HAs which provide an optimized route (i.e., in a domain or subnet on or close to the direct path between MN and CN). These mappings can be pre-configured by the network operator or dynamically discovered, e.g., .with the mechanisms described above. The MN would then send a request to this network entity and receive a reply with the RO-HA address.

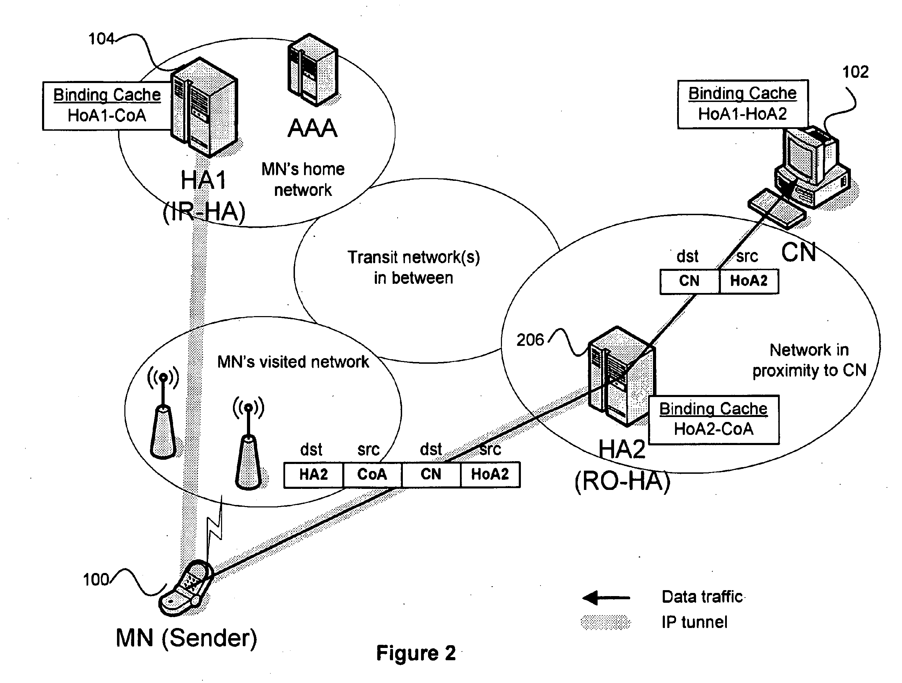

Figure 2 shows an example with data path and addresses in IP headers. The MN 100 was registered with HA1 104 and was configured with HoA1 before initiating communication with CN 102. After an application requests a communication session with CN 102, the MN 100 discovers and bootstraps with the RO- HA "HA2" 206, configures a corresponding HoA ("RO-HoA" or "HoA2") and uses it for communication with CN 102 in bi-directional tunnelling mode. Therefore, the MN 102 tunnels data packets to HA2 206, which decapsulates and sends them to CN 102.

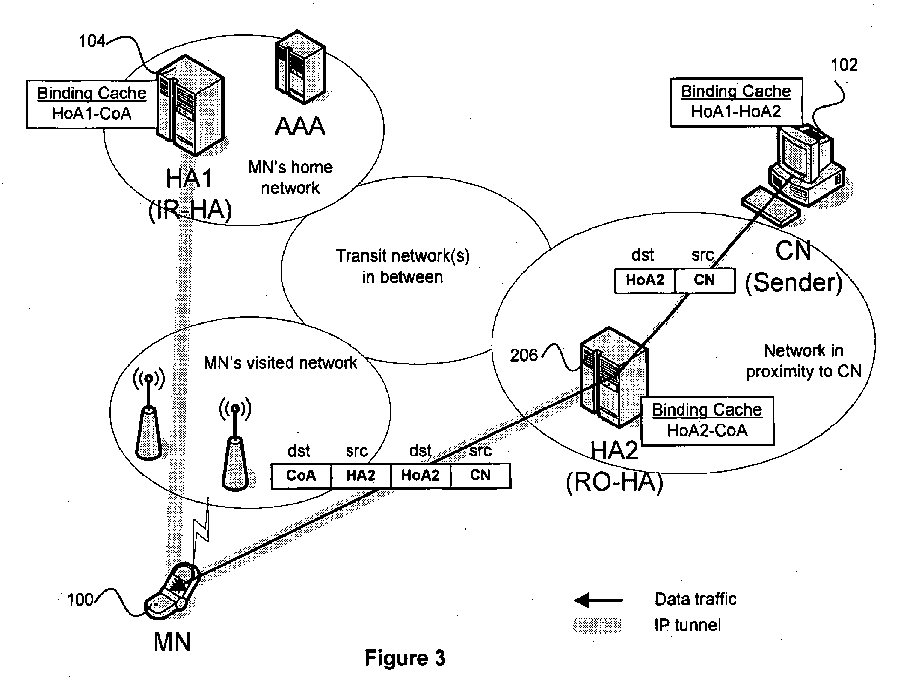

When CN (102) replies, it sends packets to MN's RO-HoA (HoA2) 206, which are routed to RO-HA (HA2) 206 and tunnelled to MN 100 (see Figure 3). HoA1 104 is not used in this communication session.

For subsequent sessions with the same CN or with other CNs in this network or in nearby networks, the tunnel to the RO-HA can be re-used. Upon movement, the MN sends BU messages to HA1 as well as HA2.

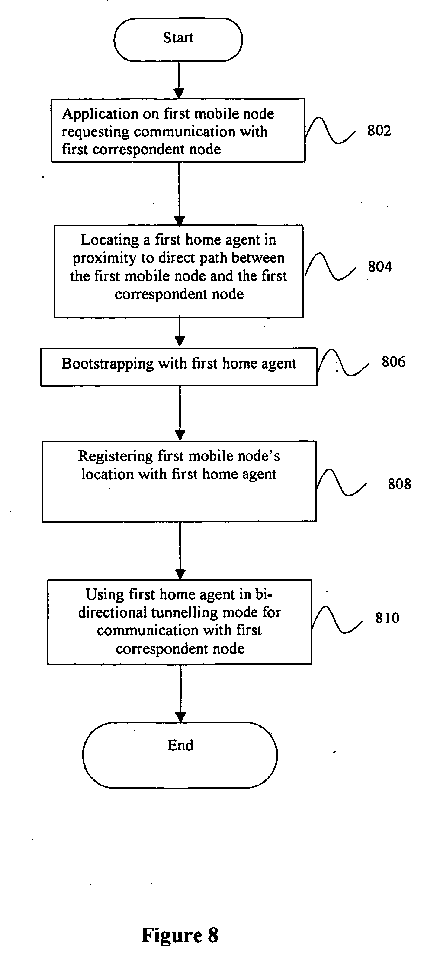

Figure 8 describes the MN initiated method in form of a flow chart. In step 802 communication is requested. The mobile node then locates a first HA in proximity to the direct path between itself and the first CN in step 804. To do this the methods described above or other methods using a distance metric, such as Quality of Service (QoS), the number of hops and/or packet delays can be used. In step 806 the MN bootstraps with the HA. This includes that the IPsec security association is set up and the HoA is assigned before authentication and authorization with Mobility Service Authoriser (MSA) is carried out. In step 808 the MN's location is registered with the first home agent, which is then used in bi-directional tunneling mode for communication with the CN in step 810.

### CN initiated communication sessions

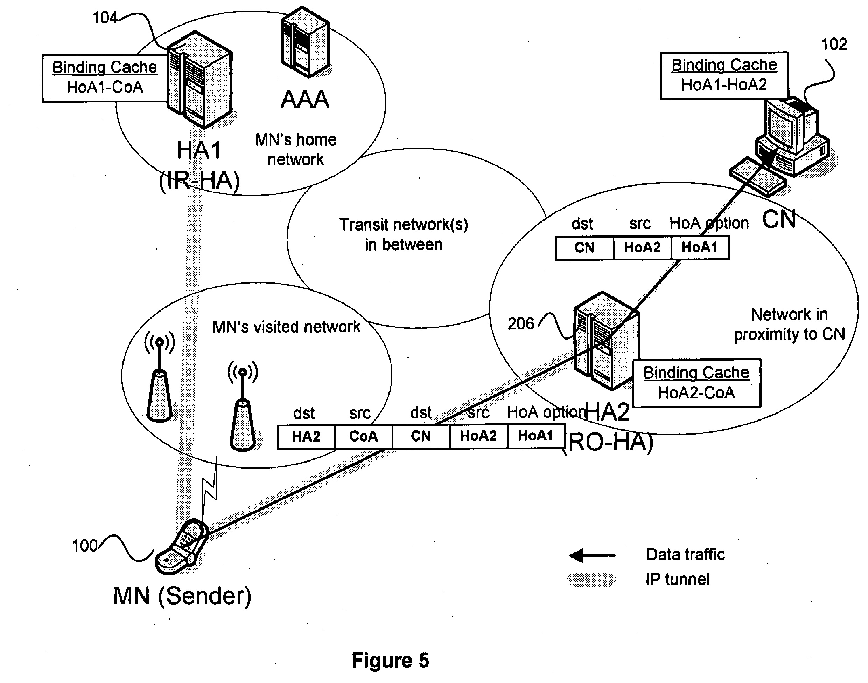

An active MN which is not at home is registered with at least one HA. The MN's HoA corresponding to this HA must be known by a CN to be reachable by this CN. This can, e.g., be achieved by publishing the HoA in DNS (Domain Name Server). Since this HA is mainly used by the MN to be reachable, it is from now on called IP-Reachability (IR)-HA (HA1 in Figure 5). In the CN-intiated case, the CN selects one of MN's IR-HoAs (i.e., HoAs belonging to one of the MN's IR-HAs), e.g., by querying DNS with the MN's host name, to contact the MN. Hence, the MN cannot select a HoA by itself and the corresponding IR-HA may not provide a short route.

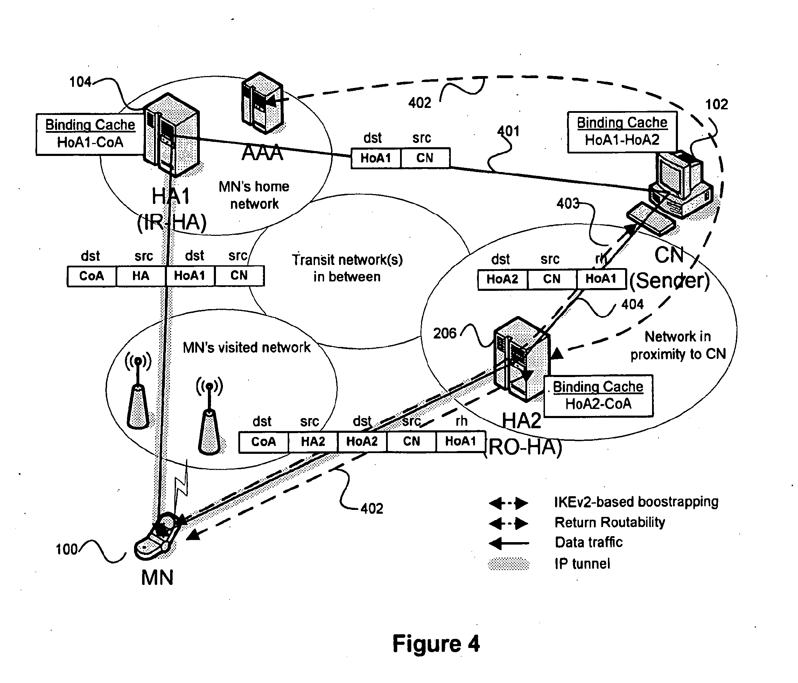

After first data packets from a CN are received by MN 100 over the IR-HA 104 (step 401 in Figure 4), the MN 100 may decide to optimize the route (e.g., depending on the distance to the IR-HA 104 from which the packets were received). Therefore, the MN 100 discovers and bootstraps with a HA 206 (step 402), which is preferably located close to CN 102 and preferably close to the direct path between MN 100 and CN 102. This HA is again a RO-HA as defined in the MN-initiated case (HA2 in Figure 4). Note that the RO-HA 206 should rather be located close to CN 102 than to MN 100 in order to keep strong location privacy support and prevent frequent bootstrapping in the presence of MN mobility.

After bootstrapping, the MN 100 registers with the RO-HA and starts the return routability procedure with the CN over the reverse tunnel to the RO-HA 206 (step 403). The MN uses the IR-HoA (HoA1) as HoA and the RO-HoA (HoA2) as CoA in CoTi and BU messages and sends those messages to the CN 102 over the reverse tunnel to RO-HA 206. BU messages sent to HAs still contain the "real" CoA. Hence, data packets sent by CN 102 (step 404) are routed to RO-HA 206 using the type 2 routing header and tunnelled to the MN 100 including the routing header. Hence, from CN's point of view the MN 100 is located in the network of RO-HA 206. Consequently, the route is now optimized without breaking the session and location privacy is provided. Since neither HAs nor CNs have to be modified, the solution is easy to deploy and no transition issues arise.

Figure 5 shows the path and addresses in case the MN sends data packets over the reverse tunnel to the RO-HA (HA2) 206. The packets contain the IR-HoA (HoA1) in the HoA option and RO-HoA (HoA2) 206 as source address in the inner IP header. Note that this is different from RFC3775, which prescribes that the CoA is used as source address in route optimization mode.

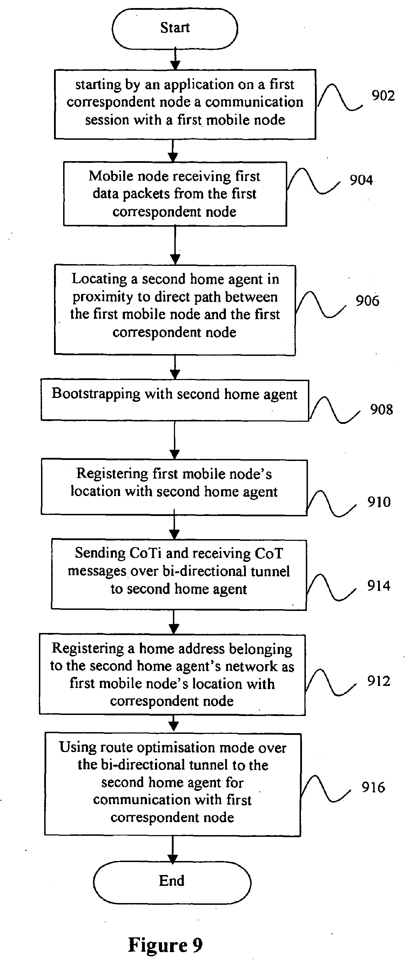

Figure 9 is a flow chart depicting the CN initiated case. After communication is requested in step 902 the MN receives data packets from the first CN in step 904. A second HA in proximity to the direct path between the first MN and first CN is located in step 906 and bootstrapping with the second HA is carried out in step 908. In step 910 the first MN's location is registered with the second HA and a home address belonging to the second HA's network is registered as first MN's location with the CN in step 912. CoT and CoTi messages are sent over the bi-directional tunnel in step 914, and in step 916 route optimization mode is used, both with the MN's second HoA used as CoA.

For subsequent sessions with the same CN or with other CNs in this network or in nearby networks, the tunnel to the RO-HA (HA2) can be re-used. Upon movement, the MN sends BU messages to the IR-HA as well as the RO-HA. However, it does not send a BU message to the CN, as it would usually do in route optimization mode according to RFC3775. instead, it only sends a BU to CN if it changes the bi-directional tunnel underlying the route optimization mode from RO-HA to another RO-HA (and periodically to prevent the binding lifetime to expire).

### General Issues and Variants

Below some possible optimizations to the method described above are presented and then further application of the invention that go beyond location privacy are discussed.

### Optimisation

Several optimizations are possible to increase the performance of mechanism described in this invention.

Before the optimized route can be used, the RO-HA must first be discovered. To reduce the time needed for this discovery, two options are possible.

Firstly, IR-HA discovers the RO-HA, either based on a configured list of HAs or dynamically, and suggests the RO-HA address to MN. The discovery can already start upon receiving the first data packets from a CN. The suggestion of the RO-HA address can, e.g., be done by sending a trigger message as defined for HA reliability.

Secondly, CN discovers RO-HA, either based on a configured list of HAs or dynamically (e.g., from announcements in local network such as Router Advertisements or DHCP messages), and suggests the RO-HA address to MN. The suggestion of the RO-HA address can, e.g., be done by sending a trigger message as defined for HA reliability.

The optimized route can first be used after the MN has completed the bootstrapping procedure with RO-HA. To reduce this time, the following options are possible.

Firstly, upon receiving first data packet from CN, IR-HA bootstraps with RO-HA on behalf of MN. Subsequently, the parameters and the state of the Ipsec (Internet Protocol security) security associations are transferred from IR-HA to MN. Hence, the time to establish the IPsec security association is reduced.

Secondly, upon receiving first data packet from CN, IR-HA generates and transfers shared session keys together with authorization data to RO-HA. Hence, the time needed to consult AAAH (Authentication, Authorisation and Accounting, Home domain) server is saved.

Thirdly, the return routability procedure with CN can be executed concurrently to the bootstrapping procedure with RO-HA by tunneling CoT/i packets from MN over IR-HA and RO-HA to CN. The corresponding states in RO-HA can be established by IR-HA.

Another point is that operators may want to assist in the decision to optimize the route. Therefore, IR-HA may trigger the MN to optimize the route (e.g., upon receiving first data packets from CN) and bootstrap with RO-HA. Therefore, the trigger messages defined for HA reliability can be re-used.

At the time the session is moved from the non-optimized route to the optimized route, data packets may get lost or re-ordered. This may have a negative impact on the service quality. One option to prevent this for services requiring a call/connection setup signalling exchange (e.g., SIP-based (Signalling Initiation Protocol) services) is to execute the call/connection setup signalling over the non-optimized route in parallel to establishing the optimized route. Only if both processes are complete, the data transfer is started. This can be achieved by introducing a new trigger message indicating that the optimized route is established or by adding this information to the call/connection setup signalling.

If the CN is mobile and far away from its IR-HA, the route is not well optimized. If either IR-HA or RO-HA is a HA of CN, at least one HA knows the CoAs and locations of both MN and CN and hence can discover a new RO-HA which is located in between MN's and CN's visited network. Hence, the session can be moved again to the new RO-HA to further optimize the route.

The situation that MN and CN both are registered at the same HA can happen accidentally or can be forced. A possible option to force this situation is that MN and CN or some entity/entities on behalf of them (e.g., their IR-HAs) negotiate(s) a common HA and trigger their MN/CN to bootstrap with the common HA.

A disadvantage of using route optimization mode over the bi-directional tunnelling mode in the CN-initiated session scenario is the additional overhead caused by the routing header inside the reverse tunnel. Options to get rid of this overhead are, e.g., RO-HA intercepts data packets addressed to RO-HoA, replaces the address in the destination field of the IP header with the address in the routing header and removes the routing header before tunnelling the packet; or the MN uses the RO-HA address as CoA (instead of RO-HoA) and sends BU messages containing <IR-HoA,CoA> to RO-HA. In this case the routing header is automatically removed by RO-HA (since it contains the address of the RO-HA). After removal, the packets are addressed to IR-HoA, which triggers RO-HA to consult its Binding Cache and tunnel the packets to the MN's CoA. However, both options require changes to HA implementations, which are not needed for the basic (unoptimized) method.

### Other applications of this invention

This invention has broader applicability than only for location privacy. More generally, it enables moving a data session to a new anchor HA without breaking the data session (i.e., without changing the HoA of the session).

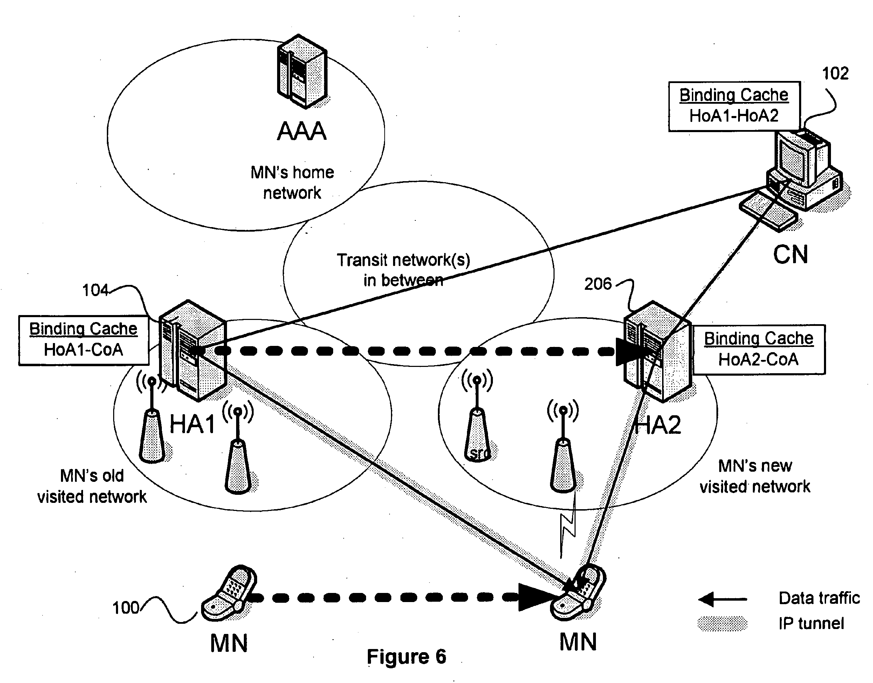

One application is optimized routing in scenarios when MN moves and is able to bootstrap with new (local) HAs upon entering a new network (see Figure 6). The route in bi-directional tunnelling mode can be optimized by moving the data session from HA1 to HA2 using this invention.

A second application is load balancing for HAs. A highly loaded HA may want to reduce its load and trigger the MN to bootstrap with another HA and move the session to this HA. This invention can be used to move an ongoing data session without breaking it (note that other than in Figure 6, the MN does not necessarily move in this case). This enables Internet-wide load balancing between HAs located in different networks. RFC3775 only supports load balancing between HAs located in the same network (i.e., on the same link).

The load balancing could further be extended by bootstrapping with multiple HAs and maintaining multiple bi-directional tunnels (each using route optimization mode over bi-directional tunnelling mode). The MN can then send the data packets over those routes, e.g., in a round-robin fashion. However, this requires extensions to RFC3775 currently under development in the IETF monami6 working group, which allow the MN to register multiple CoAs with the CN.

A third application is fault tolerance. When the MN has moved a session from a HA1 to a HA2 by using this invention, HA1 can temporarily go down without interrupting the communication between MN and CN using HoA1. However, HA1 is still needed for routing HoT/HoTi (Home Test/Home Test init) messages, which are needed for updating the binding in CN when the binding lifetime expires or HA2 is changed.

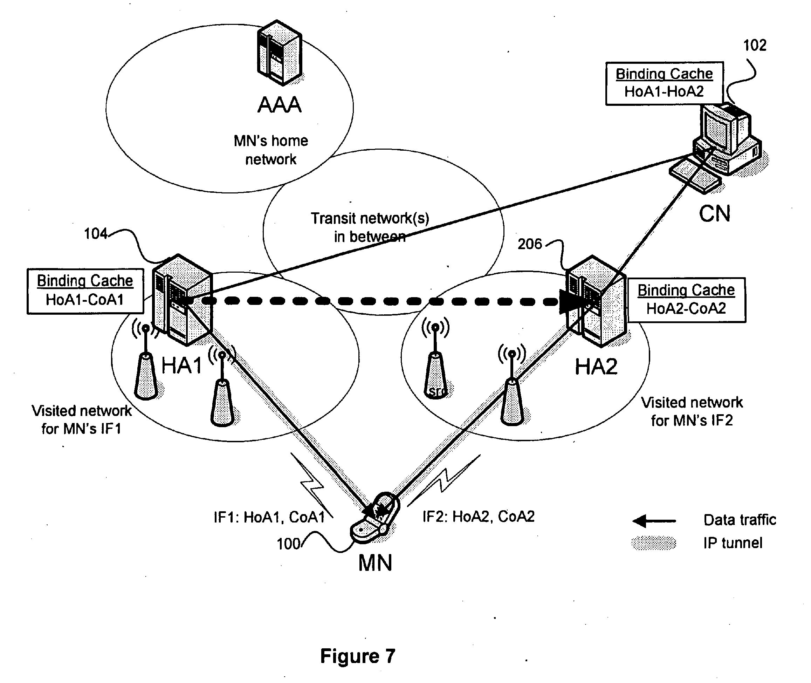

A fourth application is to move the data sessions arbitrarily between different network interfaces and the corresponding anchors. For instance, a MN may be equipped with a WLAN (Wireless Local Area Network) and a cellular network (e.g., UMTS, Universal Mobile Telecommunications Standard) interface (IF), the corresponding addresses being registered as HoAs at HA1 and HA2, respectively. Then this invention enables the MN to move ongoing data sessions from the WLAN to the UMTS interface or vice versa by moving the session from HA1 to HA2 or vice versa (see Figure 7) as described above.

Although this invention is described with respect to a packet-switched system running the Mobile IPv6 protocol, the invention is not limited to this protocol. Instead, it is applicable to systems running any mobility management protocol, which support both routing of data packets through a mobility anchor and routing of data packets without passing through the anchor. One example of such a protocol is Mobile IPv4 [RFC3344] with route optimization extension.

Instead of running on the mobile node, the mobility management protocol can also run on a proxy node without loss of applicability of this invention. In this case, the proxy node executes all necessary actions described in this document including sending location updates to the network on behalf of the mobile node. Examples of such protocols are any kinds of Proxy Mobile (e.g., [K. Chowdhury, "Network Based Layer 3 Connectivity and Mobility Management for IPv4", draft-chowdhury-netmip4-00.txt, February 2006] or [K. Chowdhury, A. Singh, "Network Based Layer 3 Connectivity and Mobility Management for IPv6", draft-chowdhury-netmip6-00.txt, February 2006]) or protocols proposed and developed in the netlmm WG (e.g., [J. Wood, K. Nishida, "Edge Mobility Protocol (EMP)", draft-wood-netlmm-emp-base-00.txt, October 2005]).

Another embodiment of the invention relates to the implementation of the above described various embodiments using hardware and software. It is recognised that the various above-mentioned methods, as well as the various logical blocks and modules described above may be implemented where performed using computing devices (processors), as for example general purpose processors, Application Specific Integrated Circuits (ASIC), Field Programmable Gate Arrays (FPGA) or other programmable logic devices, etc. The various embodiments of the invention may also be performed or embodied by a combination of these devices.

Further the various embodiments of the invention may also be implemented by means of software modules which are executed by a processors or directly in hardware. Also, a combination of software modules and a hardware implementation may be possible. The software modules may be stored in any kind of computer-readable storage medium, for example RA;, EPROM, EEPROM, flash memory, registers, hard disks, CD-ROM, DVD, etc.

## Claims

1. A method for routing packets in a system of packet-switched networks comprising a plurality of home agents, at least one mobile node and at least one correspondent node, a first mobile node being configured with at least one topologically correct internet protocol address and a first home address, the method comprising the steps of:
a) starting (902) by an application on a first correspondent node a communication session with the first mobile node by sending data packets to the first mobile node's first home address, the first home address and a first of mobile node's topologically correct addresses being registered at the first home agent;
b) receiving by the mobile node (904) first data packets from the first correspondent node tunnelled over the first home agent;
and **characterised in** further comprising the steps of:
c) locating (906) a second of the plurality of home agents in proximity to a direct path between the first mobile node and the first correspondent node;
d) bootstrapping (908) with the second home agent to obtain a second home address and other communication parameters;
e) registering (910) the first mobile node's location with the second home agent by sending a first binding update comprising the first mobile node's topologically correct address as care-of address and the second home address as home address.
f) sending (914) a first care-of-test init message to the first correspondent node over a bi-directional tunnel to the second home agent, with a source address in the internet protocol header of the first care-of-test init message set to the second home address;
g) receiving (914) a care-of-test message from the first correspondent node over the bi-directional tunnel to the second home agent;
h) registering (912) the first mobile node's location with the first correspondent node by sending a second binding update message comprising the second home address as care-of address and the first home address as home address; and
i) using (916) the route optimization mode over the bi-directional tunnel to the second home agent for communication between the first mobile node and the first correspondent node with the communication parameters set up in the bootstrapping step by sending data packets destined for the first correspondent node by the first mobile node over the bi-directional tunnel to the second home agent, the data packets in the tunnel comprising the first home address in a home address option, the second home address as source address in the internet protocol header and the first correspondent node's address as destination address in the internet protocol header.

2. The method according to claim 1, wherein the step of bootstrapping with the second home agent is carried out by the first mobile node.

3. The method according to claim 1 or 2, wherein the step of bootstrapping with the second home agent is carried out by a proxy node on behalf of the first mobile node.

4. The method according to any of claims 1 to 3, wherein the step of registering the first mobile node's location with the second home agent is carried out by the first mobile node.

5. The method according to any of claims 1 to 3, wherein the step of registering the first mobile node's location with the second home agent is carried out by a proxy node on behalf of the first mobile node.

6. The method according to any of claims 1 to 5, wherein the step of registering (912) the first mobile node's location with the first correspondent node is carried out by the first mobile node.

7. The method according to any of claims 1 to 5, wherein the step of registering (912) the first mobile node's location with the first correspondent node is carried out by a proxy node on behalf of the first mobile node.

8. The method according to any of claims 1 to 7, wherein the step of sending and receiving care-of test init and care-of test messages (914) to and from the first correspondent node is carried out by the first mobile node.

9. The method according to any of claims 1 to 7, wherein the step of sending and receiving care-of test init and care-of test messages (914) to and from the first correspondent node is carried out by a proxy node on behalf of the first mobile node.

10. The method according to any of claims 1 to 9, wherein the step of locating the second of the plurality of home agents is carried out by the first mobile node.

11. The method according to any of claims 1 to 9, wherein the step of locating the second of the plurality of home agents is carried out by a proxy node on behalf of the first mobile node.

12. The method according to any of claims 1 to 11, wherein the second home agent is situated closer to the first correspondent node than to the first mobile node.

13. The method according to any of claims 1 to 12, wherein the step of locating the second of the plurality of home agents between the first correspondent node and the first mobile node comprises the following step:
querying a domain name server for a home agent address; the domain name being constructed from at least the first correspondent node's domain name, to find an address of the second home agent in a same domain as the first correspondent node.

14. The method according to any of claims 1 to 12, wherein the step of locating the second of the plurality of home agents comprises the steps of:
sending a request to an anycast address constructed from at least the first correspondent node's address prefix; and
replying by one of the plurality of home agents to the request with an address of the second home agent.

15. The method according to any of claims 1 to 12, wherein the step of locating the second of the plurality of home agents comprises the following steps:
sending a request containing information about the first correspondent node to a dedicated network entity; and
receiving a reply from the dedicated network entity with an address of the second home agent.

16. The method according to claim 15, further comprising the following steps carried out by the dedicated network entity:
mapping an address of the first correspondent node to an address of one of a plurality of home agents located close to the first correspondent node.

17. The method according to claim 16, wherein the mapping is pre-configured or dynamically discovered.

18. The method according to any of claims 1 to 17, wherein the second home agent is reused in a subsequent communication sessions with the same or other correspondent nodes in the same or a nearby domain by skipping the locating and the bootstrapping steps.

19. A method for routing packets in a system of packet-switched networks comprising a plurality of home agents, at least one mobile node and at least one correspondent node, a first mobile node being configured with at least one topologically correct internet protocol address, the method comprising the steps of:
requesting (802) communication with a first correspondent node by an application on the first mobile node,
locating (804) a first of the plurality of home agents in proximity to a direct path between the first mobile node and the first correspondent node;
bootstrapping (806) with the first home agent to obtain a first home address and other communication parameters;
registering (808) the first mobile node's location with the first home agent by sending a binding update message comprising a first mobile node's topologically correct address as care-of address and the first home address as home address; and
using (810) the first home agent in bi-directional tunnelling mode for communication with the first correspondent node, with the communication parameters set up in the bootstrapping step and the first home address as home address;
further **characterised in that**, the located first home agent is to be situated closer to the first correspondent node than to the first mobile node;
and the step of locating the first of the plurality of home agents comprises the following step;
querying a domain name server for a home agent address, the domain name being constructed from at least the first correspondent node's domain name, to find an address of the first home agent.

20. The method according claim 19, wherein the step of bootstrapping with the first home agent is carried out by the first mobile node.

21. The method according to claim 19, wherein the step of bootstrapping with the first home agent is carried out by a proxy node on behalf of the first mobile node.

22. The method according to any of claims 20 or 21, wherein the step of registering the first mobile node's location with the first home agent is carried out by the first mobile node.

23. The method according to any of claims 19 to 21, wherein the step of registering the first mobile node's location with the first home agent is carried out by a proxy node on behalf of the first mobile node.

24. The method according to any of claims 19 to 23, wherein the step of locating the first of the plurality of home agents is carried out by the first mobile node.

25. The method according to any of claims 19 to 23, wherein the step of locating the first of the plurality of home agents is carried out by a proxy node on behalf of the first mobile node.

26. The method according to any of claims 19 to 25, wherein the first home agent is reused in a subsequent communication sessions with the same or other correspondent nodes in the same or a nearby domain by skipping the locating and the bootstrapping steps.

27. A mobile node (100) in a system of packet-switched networks comprising a plurality of home agents and at least one correspondent node (102), the mobile node (100) being configured with at least one topologically correct internet protocol address, the mobile node (100) comprising:
an application adapted to request communication with a first correspondent node (102);
locating means adapted to locate a first (206) of the plurality of home agents in proximity to a direct path between the mobile node (100) and the first correspondent node (102);
bootstrapping means adapted to bootstrap with the first home agent (206) to obtain a first home address and other communication parameters;
transmission means adapted to send a binding update message comprising a first topologically correct address as care-of-address and the first home address as home address; and
communication means adapted to use the first home agent (206) in bi-directional tunnelling mode for communication with the first correspondent node (102), with the communication parameters and the first home address as home address;
being **characterised in that** the located first home agent is to be situated closer to the first correspondent node than to the first mobile node; and
the locating means for locating the first of the plurality of home agents are also adapted to.
query a domain name server for a home agent address, the domain name being constructed from at least the first correspondent node's domain name, to find an address of the first home agent.

28. The mobile node according to claim 27 adapted to carry out the method steps according to any of claims 19 and 25.

29. A system of packet-switched networks for routing packets comprising a plurality of home agents, at least one mobile node (100) and at least one correspondent node (102), a first mobile node being configured with at least one topologically correct internet protocol address, the system comprising:
an application on the first mobile node (100) adapted to request communication with a first correspondent node (102);
locating means adapted to locate a first (206) of the plurality of home agents in proximity to a direct path between the first mobile node (100) and the first correspondent node (102);
bootstrapping means adapted to bootstrap with the first home agent (206) to obtain a first home address and other communication parameters;
registration means adapted to register the first mobile node's location with the first home agent (206) by sending a binding update message comprising a first mobile node's topologically correct care-of-address and the first home address as home address; and
the first home agent (206) being adapted to be used in a bi-directional tunnelling mode for communication with the first correspondent node (102), with the communication parameters and the first home address as home address;
and being **characterised in that** the located first home agent is to be situated closer to the first correspondent node than to the first mobile node; and
the locating means for locating the first of the plurality of home agents are also adapted to
query a domain name server for a home agent address, the domain name being constructed from at least the first correspondent node's domain name, to find an address of the first home agent.

30. The system according to claim 29 adapted to carry out the method steps according to any of claims 19 and 25.

31. A computer readable medium storing instructions that, when executed by a processor of a mobile node in a system of packet-switched networks comprising a plurality of home agents and a t least one correspondent node, the mobile node being configured with at least one topologically correct internet protocol address, cause the mobile node to carry out the following steps:
requesting communication with a first correspondent node by an application on the first mobile node,
locating a first of the plurality of home agents in proximity to a direct path between the first mobile node and the first correspondent node;
bootstrapping with the first home agent to obtain a first home address and other communication parameters;
registering the first mobile node's location with the first home agent by sending a binding update message comprising a first topologically correct address as care-of address and the first home address as home address; and
using the first home agent in bi-directional tunnelling mode for communication with the first correspondent node, with the communication parameters set up in the bootstrapping step and the first home address as home address;
further **characterised in that**, the located first home agent is to be situated closer to the first correspondent node than to the first mobile node; and
the step of locating the first of the plurality of home agents comprises the following step;
querying a domain name server for a home agent address, the domain name being constructed from at least the first correspondent node's domain name, to find an address of the first home agent.

32. The computer-readable medium according to claim 31 storing instructions that, when executed by a processor of a mobile node in a system of packet-switched networks comprising a plurality of home agents and a t least one correspondent node, the mobile node being configured with at least one topologically correct internet protocol address, cause the mobile node to carry out the method steps according to any of claims 19 and 25.

33. A mobile node in a system of packet-switched networks for routing packets comprising a plurality of home agents and at least one correspondent node, the mobile node being configured with at least one topologically correct internet protocol address and a first home address, the mobile node comprising:
receiving means adapted to receive data packets from a first correspondent node tunnelled over the first home agent;
and **characterised in** further comprising:
location means for locating a second of the plurality of home agents in proximity to a direct path between the mobile node and the first correspondent node;
bootstrapping means adapted to bootstrap with the second home agent to obtain a second home address and other communication parameters:
transmission means adapted to send a first binding update comprising the mobile node's topologically correct address as care-of-address and the second home address as home address to register the mobile node's location with the second home agent;
the transmission means further being adapted to send a second binding update message comprising the second home address as care-of-address and the first address as home address to register the mobile node's location with the first correspondent node;
the transmission means further being adapted to send a first care-of-test init message to the first correspondent node over a bi-directional tunnel to the second home agent, with a source address in the internet protocol header of the first care-of-test init message set to the second home address;
the receiving means further being adapted to receive a care-of-test message from the first correspondent node over the bi-directional tunnel to the second home agent; and
communication means adapted to use a route optimisation mode over the bi-directional tunnel to the second home agent for communication with the first correspondent node with the communication parameters by sending data packets destined for the first correspondent node over the bi-directional tunnel to the second home agent, the data packets in the tunnel comprising the first home address in a home address option, the second home address as source address in an internet protocol header and the first correspondent node's address as destination address in the internet protocol header.

34. The mobile node according to claim 33 adapted to carry out the method steps according to any of claims 12 to 18.

35. A system of packet-switched networks for routing packets comprising a plurality of home agents, at least one mobile node and at least one correspondent node, a first mobile node being configured with at least one topologically correct internet protocol address and a first home address, the system comprising:
an application on a first correspondent node adapted to start a communication session with the first mobile node by sending data packets to the first mobile node's first home address, the first home address being registered at the first home agent;
the first mobile node being adapted to receive data packets from the first correspondent node tunnelled over the first home agent;
and **characterised in** further comprising:
location means for locating a second of the plurality of home agents in proximity to a direct path between the first mobile node and the first correspondent node;
bootstrapping means adapted to bootstrap with the second home agent to obtain a second home address and other communication parameters;
the first mobile node being adapted to send a first binding update comprising the first mobile node's topologically correct address as care-of-address and the second home address as home address to register the first mobile node's location with the second home agent;
the first mobile node further being adapted to send a second binding update message comprising the second home address as care-of-address and the first address as home address to register the first mobile node's location with the first correspondent node;
the first mobile node further being adapted to send a first care-of-test init message to the first correspondent node over a bi-directional tunnel to the second home agent, with a source address in the internet protocol header of the first care-of-test init message set to the second home address;
the first mobile node further being adapted to receive a care-of-test message from the first correspondent node over the bi-directional tunnel to the second home agent; and
the first mobile node further being adapted to use a route optimisation mode over the bi-directional tunnel to the second home agent for communication with the first correspondent node with the communication parameters by sending data packets destined for the first correspondent node over the bi-directional tunnel to the second home agent, the data packets in the tunnel comprising the first home address in a home address option, the second home address as source address in an internet protocol header and the first correspondent node's address as destination address in the internet protocol header.

36. The system of claim 35 adapted to carry out the method steps according to any of claims 12 to 18.

37. A computer readable medium storing instructions that, when executed by a processor of a mobile node in a system of packet-switched networks for routing packets comprising a plurality of home agents and at least one correspondent node, the mobile node being configured with at least one topologically correct internet protocol address and a first home address, cause the mobile node to carry out the following steps:
receiving data packets from a first correspondent node tunnelled over the first home agent;
and **characterised in** further carrying out the steps of:
locating a second of the plurality of home agents in proximity to a direct path between the mobile node and the first correspondent node;
bootstrapping with the second home agent to obtain a second home address and other communication parameters;
registering the mobile node's location with the second home agent by sending a first binding update comprising the mobile node's topologically correct address as care-of address and the second home address as home address;
registering the mobile node's location with the first correspondent node by sending a second binding update message comprising the second home address as care-of address and the first home address as home address;
sending a first care-of-test init message to the first correspondent node over a bidirectional tunnel to the second home agent, with a source address in the internet protocol header of the first care-of-test init message set to the second home address;
receiving a care-of-test message from the first correspondent node over the bi-directional tunnel to the second home agent; and
using the route optimization mode over the bi-directional tunnel to the second home agent for communication between the first mobile node and the first correspondent node with the communication parameters set up in the bootstrapping step by sending data packets destined for the first correspondent node by the first mobile node over the bi-directional tunnel to the second home agent, the data packets in the tunnel comprising the first home address in a home address option, the second home address as source address in an internet protocol header and the first correspondent node's address as destination address in the internet protocol header.

38. The computer-readable medium according to claim 37 storing instructions that, when executed by a processor of a mobile node in a system of packet-switched networks for routing packets comprising a plurality of home agents and at least one correspondent node, the mobile node being configured with at least one topologically correct internet protocol address and a first home address, cause the mobile node to carry out the steps according to any of claims 12 to 18.

## Patentansprüche

1. Verfahren zum Durchleiten (routing) von Paketen in einem System von paketgeschalteten Netzwerken mit einer Mehrzahl von Heimagenten, wenigstens einem Mobilknoten und wenigstens einem Korrespondentenknoten, wobei ein erster Mobilknoten mit wenigstens einer topologisch korrekten Internetprotokolladresse und einer ersten Heimadresse konfiguriert ist, wobei das Verfahren die nachfolgenden Schritte umfasst:
(a) durch eine Anwendung an einem ersten Korrespondentenknoten erfolgendes Anfangen (902) einer Kommunikationssitzung mit dem ersten Mobilknoten durch Senden von Datenpaketen an eine dem ersten Mobilknoten zu eigene erste Heimadresse, wobei die erste Heimadresse und eine erste von dem Mobilknoten zu eigenen topologisch korrekten Adressen an dem ersten Heimagenten registriert werden;
(b) durch den Mobilknoten (904) erfolgendes Empfangen erster Datenpakete von dem ersten Korrespondentenknoten mit einer Tunnelung über den ersten Heimagenten;
**dadurch gekennzeichnet, dass** es des Weiteren die nachfolgenden Schritte umfasst:
(c) Lokalisieren (906) eines zweiten aus der Mehrzahl von Heimagenten in der Nähe eines direkten Weges zwischen dem ersten Mobilknoten und dem ersten Korrespondentenknoten;
(d) Urladen (908) (bootstrapping) mit dem zweiten Heimagenten zur Ermittlung einer zweiten Heimadresse und anderer Kommunikationsparameter;
(e) Registrieren (910) einer dem ersten Mobilknoten zu eigenen Lokalisierung mit dem zweiten Heimagenten durch Senden einer ersten bindenden Aktualisierung mit der dem ersten Mobilknoten zu eigenen topologisch korrekten Adresse als Care-of-Adresse und der zweiten Heimadresse als Heimadresse;
(f) Senden (914) einer ersten Care-of-Testinitiierungsnachricht an den ersten Korrespondentenknoten über einen bidirektionalen Tunnel an den zweiten Heimagenten, wobei eine Quelladresse in dem Internetprotokollheader der ersten Care-of-Testinitiierungsnachricht auf die zweite Heimadresse eingestellt ist;
(g) Empfangen (914) einer Care-of-Testnachricht von dem ersten Korrespondentenknoten über den bidirektionalen Tunnel an den zweiten Heimagenten;
(h) Registrieren (912) der dem ersten Mobilknoten zu eigenen Lokalisierung mit dem ersten Korrespondentenknoten durch Senden einer zweiten bindenden Aktualisierungsnachricht mit der zweiten Heimadresse als Care-of-Adresse und der ersten Heimadresse als Heimadresse; und
(i) Verwenden (916) des Durchleitungsoptimierungsmodus über den bidirektionalen Tunnel an den zweiten Heimagenten zur Kommunikation zwischen dem ersten Mobilknoten und dem ersten Korrespondentenknoten mit den Kommunikationsparametern aus der Einstellung in dem Urladeschritt durch Senden von Datenpaketen mit dem ersten Korrespondentenknoten als Ziel durch den ersten Mobilknoten über den bidirektionalen Tunnel an den zweiten Heimagenten, wobei die Datenpakete in dem Tunnel die erste Heimadresse in einer Heimadressoption, die zweite Heimadresse als Quelladresse in dem Internetprotokollheader und die dem ersten Korrespondentenknoten zu eigene Adresse als Zieladresse in dem Internetprotokollheader umfassen.

2. Verfahren nach Anspruch 1, wobei der Schritt des Urladens mit dem zweiten Heimagenten von dem ersten Mobilknoten ausgeführt wird.

3. Verfahren nach Anspruch 1 oder 2, wobei der Schritt des Urladens mit dem zweiten Heimagenten von einem Proxyknoten im Namen des ersten Mobilknotens ausgeführt wird.

4. Verfahren nach einem der Ansprüche 1 bis 3, wobei der Schritt des Registrierens der dem ersten Mobilknoten zu eigenen Lokalisierung mit dem zweiten Heimagenten von dem ersten Mobilknoten ausgeführt wird.

5. Verfahren nach einem der Ansprüche 1 bis 3, wobei der Schritt des Registrierens der dem ersten Mobilknoten zu eigenen Lokalisierung mit dem zweiten Heimagenten von einem Proxyknoten im Namen des ersten Mobilknotens ausgeführt wird.

6. Verfahren nach einem der Ansprüche 1 bis 5, wobei der Schritt des Registrierens (912) der dem ersten Mobilknoten zu eigenen Lokalisierung mit dem ersten Korrespondentenknoten von dem ersten Mobilknoten ausgeführt wird.

7. Verfahren nach einem der Ansprüche 1 bis 5, wobei der Schritt des Registrierens (912) der dem ersten Mobilknoten zu eigenen Lokalisierung mit dem ersten Korrespondentenknoten von einem Proxyknoten im Namen des ersten Mobilknotens ausgeführt wird.

8. Verfahren nach einem der Ansprüche 1 bis 7, wobei der Schritt des Sendens von Care-of-Testinitiierungs- und Care-of-Testnachrichten (914) an den ersten Korrespondentenknoten und des Empfangens derselben von diesem von dem ersten Mobilknoten ausgeführt wird.

9. Verfahren nach einem der Ansprüche 1 bis 7, wobei der Schritt des Sendens von Care-of-Testinitiierungs- und Care-of-Testnachrichten (914) an den ersten Korrespondentenknoten und des Empfangens derselben von diesem von einem Proxyknoten im Namen des ersten Mobilknotens ausgeführt wird.

10. Verfahren nach einem der Ansprüche 1 bis 9, wobei der Schritt des Lokalisierens des zweiten aus der Mehrzahl von Heimagenten von dem ersten Mobilknoten ausgeführt wird.

11. Verfahren nach einem der Ansprüche 1 bis 9, wobei der Schritt des Lokalisierens des zweiten aus der Mehrzahl von Heimagenten von einem Proxyknoten im Namen des ersten Mobilknotens ausgeführt wird.

12. Verfahren nach einem der Ansprüche 1 bis 11, wobei der zweite Heimagent näher an dem ersten Korrespondentenknoten als an dem ersten Mobilknoten gelegen ist.

13. Verfahren nach einem der Ansprüche 1 bis 12, wobei der Schritt des Lokalisierens des zweiten aus der Mehrzahl von Heimagenten zwischen dem ersten Korrespondentenknoten und dem ersten Mobilknoten den nachfolgenden Schritt umfasst:
Abfragen eines Domainnamenservers nach einer Heimagentenadresse; wobei der Domainname aus wenigstens einem dem ersten Korrespondentenknoten zu eigenen Domainnamen aufgebaut ist, um eine Adresse des zweiten Heimagenten in einer selben Domain wie der erste Korrespondentenknoten zu finden.

14. Verfahren nach einem der Ansprüche 1 bis 12, wobei der Schritt des Lokalisierens des zweiten aus der Mehrzahl von Heimagenten die nachfolgenden Schritte umfasst:
Senden einer Anforderung an eine Anycast-Adresse, die aus wenigstens einem dem ersten Korrespondentenknoten zu eigenen Adresspräfix aufgebaut ist; und
durch einen aus der Mehrzahl von Heimagenten erfolgendes Erwidern auf die Anforderung mit einer Adresse des zweiten Heimagenten.

15. Verfahren nach einem der Ansprüche 1 bis 12, wobei der Schritt des Lokalisierens des zweiten aus der Mehrzahl von Heimagenten die nachfolgenden Schritte umfasst:
Senden einer Anforderung mit Information über den ersten Korrespondentenknoten an eine dedizierte Netzwerkentität; und
Empfangen einer Erwiderung von der dedizierten Netzwerkentität mit einer Adresse des zweiten Heimagenten.

16. Verfahren nach Anspruch 15, des Weiteren umfassend die von der dedizierten Netzwerkentität ausgeführten nachfolgenden Schritte:
Abbilden einer Adresse des ersten Korrespondentenknotens auf eine Adresse eines aus einer Mehrzahl von Heimagenten mit Lokalisierung nahe an dem ersten Korrespondentenknoten.

17. Verfahren nach Anspruch 16, wobei die Abbildung vorkonfiguriert oder dynamisch entdeckt (dynamically discovered) wird.

18. Verfahren nach einem der Ansprüche 1 bis 17, wobei der zweite Heimagent in einer nachfolgenden Kommunikationssitzung bzw. Sitzungen mit denselben oder anderen Korrespondentenknoten in derselben oder einer naheliegenden Domain unter Überspringung der Lokalisier- und der Urladeschritte wiederverwendet wird.

19. Verfahren zum Durchleiten von Paketen in einem System von paketgeschalteten Netzwerken mit einer Mehrzahl von Heimagenten, wenigstens einem Mobilknoten und wenigstens einem Korrespondentenknoten, wobei ein erster Mobilknoten mit wenigstens einer topologisch korrekten Internetprotokolladresse konfiguriert ist, wobei das Verfahren die nachfolgenden Schritte umfasst:
Anfordern (802) einer Kommunikation mit einem ersten Korrespondentenknoten durch eine Anwendung an dem ersten Mobilknoten,
Lokalisieren (804) eines ersten aus der Mehrzahl von Heimagenten in der Nähe eines direkten Weges zwischen dem ersten Mobilknoten und dem ersten Korrespondentenknoten;
Urladen (806) mit dem ersten Heimagenten zur Ermittlung einer ersten Heimadresse und anderer Kommunikationsparameter;
Registrieren (808) einer dem ersten Mobilknoten zu eigenen Lokalisierung mit dem ersten Heimagenten durch Senden einer bindenden Aktualisierungsnachricht mit einer dem ersten Mobilknoten zu eigenen topologisch korrekten Adresse als Care-of-Adresse und der ersten Heimadresse als Heimadresse; und
Verwenden (810) des ersten Heimagenten in einem bidirektionalen Tunnelungsmodus zur Kommunikation mit dem ersten Korrespondentenknoten mit den Kommunikationsparametern gemäß Einstellung in dem Urladeschritt und der ersten Heimadresse als Heimadresse;
des Weiteren **dadurch gekennzeichnet, dass**
der lokalisierte erste Heimagent näher an dem ersten Korrespondentenknoten als an dem ersten Mobilknoten gelegen sein soll;
und der Schritt des Lokalisierens des ersten aus der Mehrzahl von Heimagenten den nachfolgenden Schritt umfasst:
Abfragen eines Domainnamenservers nach einer Heimagentenadresse, wobei der Domainname aus wenigstens einem dem ersten Korrespondentenknoten zu eigenen Domainnamen aufgebaut ist, um eine Adresse des ersten Heimagenten zu finden.

20. Verfahren nach Anspruch 19, wobei der Schritt des Urladens mit dem ersten Heimagenten von dem ersten Mobilknoten ausgeführt wird.

21. Verfahren nach Anspruch 19, wobei der Schritt des Urladens mit dem ersten Heimagenten von einem Proxyknoten im Namen des ersten Mobilknotens ausgeführt wird.

22. Verfahren nach einem der Ansprüche 20 oder 21, wobei der Schritt des Registrierens einer dem ersten Mobilknoten zu eigenen Lokalisierung mit dem ersten Heimagenten von dem ersten Mobilknoten ausgeführt wird.

23. Verfahren nach einem der Ansprüche 19 bis 21, wobei der Schritt des Registrierens einer dem ersten Mobilknoten zu eigenen Lokalisierung mit dem ersten Heimagenten von einem Proxyknoten im Namen des ersten Mobilknotens ausgeführt wird.

24. Verfahren nach einem der Ansprüche 19 bis 23, wobei der Schritt des Lokalisierens des ersten aus der Mehrzahl von Heimagenten von dem ersten Mobilknoten ausgeführt wird.

25. Verfahren nach einem der Ansprüche 19 bis 23, wobei der Schritt des Lokalisierens des ersten aus der Mehrzahl von Heimagenten von einem Proxyknoten im Namen des ersten Mobilknotens ausgeführt wird.

26. Verfahren nach einem der Ansprüche 19 bis 25, wobei der erste Heimagent in einer nachfolgenden Kommunikationssitzung bzw. Sitzungen mit denselben oder anderen Korrespondentenknoten in derselben oder einer nahegelegenen Domain unter Überspringung der Lokalisiers- und der Urladeschritte wiederverwendet wird.

27. Mobilknoten (100) in einem System von paketgeschalteten Netzwerken mit einer Mehrzahl von Heimagenten und wenigstens einem Korrespondentenknoten (102), wobei der Mobilknoten (100) mit wenigstens einer topologisch korrekten Internetprotokolladresse konfiguriert wird, wobei der Mobilknoten (100) umfasst:
eine Anwendung zum Anfordern einer Kommunikation mit einem ersten Korrespondentenknoten (102);
Lokalisiermittel zum Lokalisieren eines ersten (206) aus der Mehrzahl von Heimagenten in der Nähe eines direkten Weges zwischen dem Mobilknoten (100) und dem ersten Korrespondentenknoten (102);
Urlademittel zum Urladen mit dem ersten Heimagenten (206) zur Ermittlung einer ersten Heimadresse und anderer Kommunikationsparameter;
Übertragungsmittel zum Senden einer bindenden Aktualisierungsnachricht mit einer ersten topologisch korrekten Adresse als Care-of-Adresse und der ersten Heimadresse als Heimadresse; und
Kommunikationsmittel zum Verwenden des ersten Heimagenten (206) in einem bidirektionalen Tunnelungsmodus zur Kommunikation mit dem ersten Korrespondentenknoten (102) mit den Kommunikationsparametern und der ersten Heimadresse als Heimadresse;
**dadurch gekennzeichnet, dass**
der lokalisierte erste Heimagent näher an dem ersten Korrespondentenknoten als an dem ersten Mobilknoten liegen soll; und
die Lokalisiermittel zum Lokalisieren des ersten aus der Mehrzahl von Heimagenten zudem dienen zum:
Abfragen eines Domainnamenservers nach einer Heimagentenadresse, wobei der Domainname aus wenigstens einem dem ersten Korrespondentenknoten zu eigenen Domainnamen aufgebaut ist, um eine Adresse des ersten Heimagenten zu finden.

28. Mobilknoten nach Anspruch 27 zum Ausführen der Verfahrensschritte nach einem der Ansprüche 19 und 25.

29. System von paketgeschalteten Netzwerken zum Durchleiten von Paketen mit einer Mehrzahl von Heimagenten, wenigstens einem Mobilknoten (100) und wenigstens einem Korrespondentenknoten (102), wobei ein erster Mobilknoten mit wenigstens einer topologisch korrekten Internetprotokolladresse konfiguriert ist, wobei das System umfasst:
eine Anwendung an dem ersten Mobilknoten (100) zum Anfordern einer Kommunikation mit einem ersten Korrespondentenknoten (102);
Lokalisiermittel zum Lokalisieren eines ersten (206) aus der Mehrzahl von Heimagenten in der Nähe eines direkten Weges zwischen dem ersten Mobilknoten (100) und dem ersten Korrespondentenknoten (102);
Urlademittel zum Urladen mit dem ersten Heimagenten (206) zur Ermittlung einer ersten Heimadresse und anderer Kommunikationsparameter;
Registriermittel zum Registrieren einer dem ersten Mobilknoten zu eigenen Lokalisierung mit dem ersten Heimagenten (206) durch Senden einer bindenden Aktualisierungsnachricht mit einer dem ersten Mobilknoten zu eigenen topologisch korrekten Care-of-Adresse und der ersten Heimadresse als Heimadresse;
wobei der erste Heimagent (206) der Verwendung in einem bidirektionalen Tunnelungsmodus zur Kommunikation mit dem ersten Korrespondentenknoten (102) mit den Kommunikationsparametern und der ersten Heimadresse als Heimadresse dient;
**dadurch gekennzeichnet, dass**
der lokalisierte erste Heimagent näher an dem ersten Korrespondentenknoten als an dem ersten Mobilknoten liegen soll; und
die Lokalisiermittel zum Lokalisieren des ersten aus der Mehrzahl von Heimagenten zudem dienen zum:
Abfragen eines Domainnamenservers nach einer Heimagentenadresse, wobei der Domainname aus wenigstens einem dem ersten Korrespondentenknoten zu eigenen Domainnamen aufgebaut ist, um eine Adresse des ersten Heimgagenten zu finden.

30. System nach Anspruch 29 zum Ausführen der Verfahrensschritte nach einem der Ansprüche 19 und 25.

31. Computerlesbares Medium zum Speichern von Anweisungen, die bei Ausführung durch einen Prozessor eines Mobilknotens in einem System von paketgeschalteten Netzwerken mit einer Mehrzahl von Heimagenten und wenigstens einem Korrespondentenknoten, wobei der Mobilknoten mit wenigstens einer topologisch korrekten Internetprotokolladresse konfiguriert ist, den Mobilknoten veranlassen, die nachfolgenden Schritte auszuführen:
Anfordern einer Kommunikation mit einem ersten Korrespondentenknoten durch eine Anwendung an dem ersten Mobilknoten,
Lokalisieren eines ersten aus der Mehrzahl von Heimagenten in der Nähe eines direkten Weges zwischen dem ersten Mobilknoten und dem ersten Korrespondentenknoten; Urladen mit dem ersten Heimagenten zur Ermittlung einer ersten Heimadresse und anderer Kommunikationsparameter;
Registrieren einer dem ersten Mobilknoten zu eigenen Lokalisierung mit dem ersten Heimagenten durch Senden einer bindenden Aktualisierungsnachricht mit einer ersten topologisch korrekten Adresse als Care-of-Adresse und der ersten Heimadresse als Heimadresse; und
Verwenden des ersten Heimagenten in einem bidirektionalen Tunnelungsmodus zur Kommunikation mit dem ersten Korrespondentenmodus mit den Kommunikationsparametern gemäß Einstellung in dem Urladeschritt und der ersten Heimadresse als Heimadresse;
des Weiteren **dadurch gekennzeichnet, dass**
der lokalisierte erste Heimagent näher an dem ersten Korrespondentenknoten als an dem ersten Mobilknoten liegen soll; und
der Schritt des Lokalisierens des ersten aus der Mehrzahl von Heimagenten den nachfolgenden Schritt umfasst:
Abfragen eines Domainnamenservers nach einer Heimagentenadresse, wobei der Domainname aus wenigstens einem dem ersten Korrespondentenknoten zu eigenen Domainnamen aufgebaut ist, um eine Adresse des ersten Heimagenten zu finden.

32. Computerlesbares Medium nach Anspruch 31 zum Speichern von Anweisungen, die bei Ausführung durch einen Prozessor eines Mobilknotens in einem System von paketgeschalteten Netzwerken mit einer Mehrzahl von Heimagenten und wenigstens einem Korrespondentenknoten, wobei der Mobilknoten mit wenigstens einer topologisch korrekten Internetprotokolladresse konfiguriert ist, den Mobilknoten veranlassen, die Verfahrensschritte nach einem der Ansprüche 19 und 25 auszuführen.

33. Mobilknoten in einem System von paketgeschalteten Netzwerken zum Durchleiten von Paketen mit einer Mehrzahl von Heimagenten und wenigstens einem Korrespondentenknoten, wobei der Mobilknoten mit wenigstens einer topologisch korrekten Internetprotokolladresse und einer ersten Heimadresse konfiguriert ist, wobei der Mobilknoten umfasst:
Empfangsmittel zum Empfangen von Datenpaketen von einem ersten Korrespondentenknoten mit einer Tunnelung über den ersten Heimagenten;
des Weiteren **dadurch gekennzeichnet, dass** er umfasst:
Lokalisiermittel zum Lokalisieren eines zweiten aus der Mehrzahl von Heimagenten in der Nähe eines direkten Weges zwischen dem Mobilknoten und dem ersten Korrespondentenknoten;
Urlademittel zum Urladen mit dem zweiten Heimagenten zur Ermittlung einer zweiten Heimadresse und anderer Kommunikationsparameter;
Übertragungsmittel zum Senden einer ersten bindenden Aktualisierung mit einer dem ersten Mobilknoten zu eigenen topologisch korrekten Adresse als Care-of-Adresse und
der zweiten Heimadresse als Heimadresse zur Registrierung einer dem Mobilknoten zu eigenen Lokalisierung mit dem zweiten Heimagenten;
wobei das Übertragungsmittel des Weiteren einem Senden einer zweiten bindenden Aktualisierungsnachricht mit der zweiten Heimadresse als Care-of-Adresse und der ersten Adresse als Heimadresse zur Registrierung einer dem Mobilknoten zu eigenen Lokalisierung mit dem Korrespondentenknoten dient;
wobei das Übertragungsmittel des Weiteren einem Senden einer ersten Care-of-Testinitiierungsnachricht an den ersten Korrespondentenknoten über einen bidirektionalen Tunnel an den zweiten Heimagenten dient, wobei eine Quelladresse in dem Internetprotokollheader der ersten Care-of-Testinitiierungsnachricht auf den zweiten Heimagenten eingestellt ist;
wobei das Empfangsmittel des Weiteren einem Empfangen einer Care-of-Testnachricht von dem ersten Korrespondentenknoten über den bidirektionalen Tunnel an den zweiten Heimagenten dient; und
Kommunikationsmittel zum Verwenden eines Durchleitungsoptimierungsmodus über den bidirektionalen Tunnel an den zweiten Heimagenten zur Kommunikation mit dem ersten Korrespondentenknoten mit den Kommunikationsparametern durch Senden von Datenpaketen mit dem ersten Korrespondentenknoten als Ziel über den bidirektionalen Tunnel an den zweiten Heimagenten, wobei die Datenpakete in dem Tunnel die erste Heimadresse in einer Heimadresseoption, die zweite Heimadresse als Quelladresse in einem Internetprotokollheader und die dem ersten Korrespondentenknoten zu eigene Adresse als Zieladresse in dem Internetprotokollheader umfassen.

34. Mobilknoten nach Anspruch 33 zum Ausführen der Verfahrensschritte nach einem der Ansprüche 12 bis 18.

35. System von paketgeschalteten Netzwerken zum Durchleiten von Paketen mit einer Mehrzahl von Heimagenten, wenigstens einem Mobilknoten und wenigstens einem Korrespondentenknoten, wobei ein erster Mobilknoten mit wenigstens einer topologisch korrekten Internetprotokolladresse und einer ersten Heimadresse konfiguriert ist, wobei das System umfasst:
eine Anwendung an einem ersten Korrespondentenknoten zum Anfangen einer Kommunikationssitzung mit dem ersten Mobilknoten durch Senden von Datenpaketen an eine dem ersten Mobilknoten zu eigene erste Heimadresse, wobei die erste Heimadresse als erster Heimagent registriert ist;
wobei der erste Mobilknoten einem Empfangen von Datenpaketen von dem ersten Korrespondentenknoten mit einer Tunnelung über den ersten Heimagenten dient;
**dadurch gekennzeichnet, dass** es des Weiteren umfasst:
Lokalisiermittel zum Lokalisieren eines zweiten aus der Mehrzahl von Heimagenten in der Nähe eines direkten Weges zwischen dem ersten Mobilknoten und dem ersten Korrespondentenknoten;
Urlademittel zum Urladen mit dem zweiten Heimagenten zur Ermittlung einer zweiten Heimadresse und anderer Kommunikationsparameter;
wobei der erste Mobilknoten einem Senden einer ersten bindenden Aktualisierung mit einer dem ersten Mobilknoten zu eigenen topologisch korrekten Adresse als Care-of-Adresse und der zweiten Heimadresse als Heimadresse zur Registrierung einer dem ersten Mobilknoten zu eigenen Lokalisierung mit dem zweiten Heimagenten dient;
der erste Mobilknoten des Weiteren einem Senden einer zweiten bindenden Aktualisierungsnachricht mit der zweiten Heimadresse als Care-of-Adresse und der ersten Adresse als Heimadresse zur Registrierung einer dem ersten Mobilknoten zu eigenen Lokalisierung mit dem ersten Korrespondentenknoten dient;
der erste Mobilknoten des Weiteren einem Senden einer ersten Care-of-Testinitiierungsnachricht an den ersten Korrespondentenknoten über einen bidirektionalen Tunnel an den zweiten Heimagenten dient, wobei eine Quelladresse in dem Internetprotokollheader der ersten Care-of-Testinitiierungsnachricht auf die zweite Heimadresse eingestellt ist;
der erste Mobilknoten des Weiteren einem Empfangen einer Care-of-Testnachricht von dem ersten Korrespondentenknoten über den bidirektionalen Tunnel an den zweiten Heimagenten dient; und
der erste Mobilknoten des Weiteren einer Verwendung eines Durchleitungsoptimierungsmodus über den bidirektionalen Tunnel an den zweiten Heimagenten zur Kommunikation mit dem ersten Korrespondentenknoten mit den Kommunikationsparametern durch Senden von Datenpaketen mit dem ersten Korrespondentenknoten als Ziel über den bidirektionalen Tunnel an den zweiten Heimagenten dient, wobei die Datenpakete in dem Tunnel die erste Heimadresse in einer Heimadressoption, die zweite Heimadresse als Quelladresse in einem Internetprotokollheader und die dem ersten Korrespondentenknoten zu eigene Adresse als Zieladresse in dem Internetprotokollheader umfassen.

36. System nach Anspruch 35 zum Ausführen der Verfahrensschritte nach einem der Ansprüche 12 bis 18.

37. Computerlesbares Medium zum Speichern von Anweisungen, die bei Ausführung durch einen Prozessor eines Mobilknotens in einem System von paketgeschalteten Netzwerken zum Durchleiten von Paketen mit einer Mehrzahl von Heimagenten und wenigstens einem Korrespondentenknoten, wobei der Mobilknoten mit wenigstens einer topologisch korrekten Internetprotokolladresse und einer ersten Heimadresse konfiguriert ist, den Mobilknoten veranlassen, die nachfolgenden Schritte auszuführen; Empfangen von Datenpaketen von einem ersten Korrespondentenknoten mit einer Tunnelung über den ersten Heimagenten; und
**dadurch gekennzeichnet, dass** es des Weiteren die nachfolgenden Schritte ausführt:
Lokalisieren eines zweiten aus der Mehrzahl von Heimagenten in der Nähe eines direkten Weges zwischen dem Mobilknoten und dem ersten Korrespondentenknoten;
Urladen mit dem zweiten Heimagenten zur Ermittlung einer zweiten Heimadresse und anderer Kommunikationsparameter;
Registrieren einer dem Mobilknoten zu eigenen Lokalisierung mit dem zweiten Heimagenten durch Senden einer ersten bindenden Aktualisierung mit der dem Mobilknoten zu eigenen topologisch korrekten Adresse als Care-of-Adresse und der zweiten Heimadresse als Heimadresse;
Registrieren einer dem Mobilknoten zu eigenen Lokalisierung mit dem ersten Korrespondentenknoten durch Senden einer zweiten bindenden Aktualisierungsnachricht mit der zweiten Heimadresse als Care-of-Adresse und der ersten Heimadresse als Heimadresse;
Senden einer ersten Care-of-Testinitiierungsnachricht an den ersten Korrespondentenknoten über einen bidirektionalen Tunnel an den zweiten Heimagenten, wobei eine Quelladresse in dem Internetprotokollheader der ersten Care-of-Testinitiierungsnachricht auf die zweite Heimadresse eingestellt ist;
Empfangen einer Care-of-Testnachricht von dem ersten Korrespondentenknoten über den bidirektionalen Tunnel an den zweiten Heimagenten; und
Verwenden des Durchleitungsoptimierungsmodus über den bidirektionalen Tunnel an den zweiten Heimagenten zur Kommunikation zwischen dem ersten Mobilknoten und dem ersten Korrespondentenknoten mit den Kommunikationsparametern gemäß Einstellung in dem Urladeschritt durch Senden von Datenpaketen mit dem ersten Korrespondentenknoten als Ziel durch den ersten Mobilknoten über den bidirektionalen Tunnel an den zweiten Heimagenten, wobei die Datenpakete in dem Tunnel die erste Heimadresse in einer Heimadressoption, die zweite Heimadresse als Quelladresse in einem Internetprotokollheader und die dem ersten Korrespondentenknoten zu eigene Adresse als Zieladresse in dem Internetprotokollheader umfassen.

38. Computerlesbares Medium nach Anspruch 37 zum Speichern von Anweisungen, die bei Ausführung durch einen Prozessor eines Mobilknotens in einem System von paketgeschalteten Netzwerken zum Durchleiten von Paketen mit einer Mehrzahl von Heimagenten und wenigstens einem Korrespondentenmodus, wobei der Mobilknoten mit wenigstens einer topologisch korrekten Internetprotokolladresse und einer ersten Heimadresse konfiguriert ist, den Mobilknoten veranlassen, die Schritte nach einem der Ansprüche 12 bis 18 auszuführen.

## Revendications

1. Procédé de routage de paquets dans un système de réseaux à commutation de paquets comprenant une pluralité d'agents d'origine, au moins un noeud mobile et au moins un noeud correspondant, un premier noeud mobile étant configuré avec au moins une adresse de protocole Internet topologiquement correcte et une première adresse d'origine, le procédé comprenant les étapes consistant à :
a) démarrer (902) une session de communication avec le premier noeud mobile par une application sur un premier noeud correspondant en envoyant des paquets de données à la première adresse d'origine du premier noeud mobile, la première adresse d'origine et une première des adresses topologiquement correctes du noeud mobile étant enregistrées au niveau du premier agent d'origine ;
b) recevoir par le noeud mobile (904) des premiers paquets de données depuis le premier noeud correspondant mis en tunnel sur le premier agent d'origine, et **caractérisé en ce qu'**il comprend en outre les étapes consistant à :
c) localiser (906) un second agent d'origine parmi ladite pluralité à proximité d'un chemin direct entre le premier noeud mobile et le premier noeud correspondant ;
d) amorcer (908) avec le second agent d'origine pour obtenir une seconde adresse d'origine et d'autres paramètres de communication ;
e) enregistrer (910) la position du premier noeud mobile avec le second agent d'origine en envoyant une première mise à jour de liaison comprenant l'adresse topologiquement correcte du premier noeud mobile comme adresse d'intérêt et la seconde adresse d'origine comme adresse d'origine ;
f) envoyer (914) un premier message d'initialisation d'essai d'intérêt au premier noeud correspondant via un tunnel bidirectionnel au second agent d'origine, avec une adresse source dans l'en-tête du protocole Internet du premier message d'initialisation d'essai d'intérêt fixée comme étant la seconde adresse d'origine ;
g) recevoir (914) un message d'essai d'intérêt du premier noeud correspondant via le tunnel bidirectionnel au niveau du second agent d'origine ;
h) enregistrer (912) la position du premier noeud mobile avec le premier noeud correspondant en envoyant un second message de mise à jour de liaison comprenant la seconde adresse d'origine comme adresse d'intérêt et la première adresse d'origine comme adresse d'origine ; et
i) utiliser (916) le mode d'optimisation de routage via le tunnel bidirectionnel au niveau du second agent d'origine pour la communication entre le premier noeud mobile et le premier noeud correspondant avec les paramètres de communication établis à l'étape d'amorçage en envoyant par le premier noeud mobile des paquets de données destinés au premier noeud correspondant via le tunnel bidirectionnel au second agent d'origine, les paquets de données dans le tunnel comprenant la première adresse d'origine dans une option d'adresse d'origine, la seconde adresse d'origine comme adresse source dans l'en-tête du protocole Internet et l'adresse du premier noeud correspondant comme adresse de destination dans l'en-tête du protocole Internet.

2. Procédé selon la revendication 1, dans lequel l'étape d'amorçage avec le second agent d'origine est exécutée par le premier noeud mobile.

3. Procédé selon la revendication 1 ou 2, dans lequel l'étape d'amorçage avec le second agent d'origine est exécutée par un noeud de serveur de proximité de la part du premier noeud mobile.

4. Procédé selon l'une quelconque des revendications 1 à 3, dans lequel l'étape d'enregistrement de la position du premier noeud mobile avec le second agent d'origine est exécutée par le premier noeud mobile.

5. Procédé selon l'une quelconque des revendications 1 à 3, dans lequel l'étape d'enregistrement de la position du premier noeud mobile avec le second agent d'origine est exécutée par un noeud de serveur de proximité de la part du premier noeud mobile.

6. Procédé selon l'une quelconque des revendications 1 à 5, dans lequel l'étape d'enregistrement (912) de la position du premier noeud mobile avec le premier noeud correspondant est exécutée par le premier noeud mobile.

7. Procédé selon l'une quelconque des revendications 1 à 5, dans lequel l'étape d'enregistrement (912) de la position du premier noeud mobile avec le premier noeud correspondant est exécutée par un noeud de serveur de proximité de la part du premier noeud mobile.

8. Procédé selon l'une quelconque des revendications 1 à 7, dans lequel l'étape d'envoi et de réception de messages d'initialisation d'essai d'intérêt et d'essai d'intérêt (914) vers et depuis le premier noeud correspondant est exécutée par le premier noeud mobile.

9. Procédé selon l'une quelconque des revendications 1 à 7, dans lequel l'étape d'envoi et de réception de messages d'initialisation d'essai d'intérêt et d'essai d'intérêt (914) vers et depuis le premier noeud correspondant est exécutée par un noeud de serveur de proximité de la part du premier noeud mobile.

10. Procédé selon l'une quelconque des revendications 1 à 9, dans lequel l'étape de localisation du second agent d'origine parmi ladite pluralité est exécutée par le premier noeud mobile.

11. Procédé selon l'une quelconque des revendications 1 à 9, dans lequel l'étape de localisation du second agent d'origine parmi ladite pluralité est exécutée par un noeud de serveur de proximité de la part du premier noeud mobile.

12. Procédé selon l'une quelconque des revendications 1 à 11, dans lequel le second agent d'origine est situé plus près du premier noeud correspondant que du premier noeud mobile.

13. Procédé selon l'une quelconque des revendications 1 à 12, dans lequel l'étape de localisation du second agent d'origine parmi ladite pluralité entre le premier noeud correspondant et le premier noeud mobile comprend l'étape suivante :
- demander à un serveur de nom de domaine une adresse d'agent d'origine, le nom de domaine étant constitué à partir d'au moins le nom de domaine du premier noeud correspondant pour trouver une adresse du second agent d'origine dans le même domaine que le premier noeud correspondant.

14. Procédé selon l'une quelconque des revendications 1 à 12, dans lequel l'étape de localisation du second agent d'origine parmi ladite pluralité comprend les étapes qui consistent à :
- envoyer une demande à une adresse anycast constituée à partir d'au moins le préfixe d'adresse du premier noeud correspondant ; et
- répondre par un agent d'origine parmi ladite pluralité à la demande avec une adresse du second agent d'origine.

15. Procédé selon l'une quelconque des revendications 1 à 12, dans lequel l'étape de localisation du second agent d'origine parmi ladite pluralité comprend les étapes suivantes :
- envoyer une demande contenant des informations concernant le premier noeud correspondant à une entité de réseau dédiée ; et
- recevoir une réponse de l'entité de réseau dédiée avec une adresse du second agent d'origine.

16. Procédé selon la revendication 15, comprenant en outre l'étape suivante exécutée par l'entité de réseau dédiée :
- le mappage d'une adresse du premier noeud correspondant à une adresse d'un agent origine parmi une pluralité, localisé près du premier noeud correspondant.

17. Procédé selon la revendication 16, dans lequel le mappage est préconfiguré ou découvert dynamiquement.

18. Procédé selon l'une quelconque des revendications 1 à 17, dans lequel le second agent d'origine est réutilisé dans des sessions de communication ultérieures avec des noeuds correspondants identiques ou différents dans le même domaine ou dans un domaine proche, en sautant les étapes de localisation et d'amorçage.

19. Procédé de routage de paquets dans un système de réseaux à commutation de paquets comprenant une pluralité d'agents d'origine, au moins un noeud mobile et au moins un noeud correspondant, un premier noeud mobile étant configuré avec au moins une adresse de protocole Internet topologiquement correcte, le procédé comprenant les étapes consistant à :
- demander (802) une communication avec un premier noeud correspondant par une application au niveau du premier noeud mobile,
- localiser (804) un premier agent d'origine parmi ladite pluralité, à proximité d'un chemin direct entre le premier noeud mobile et le premier noeud correspondant ;
- amorcer (806) avec le premier agent d'origine pour obtenir une première adresse d'origine et d'autres paramètres de communication ;
- enregistrer (808) la position du premier noeud mobile avec le premier agent d'origine en envoyant un message de mise à jour de liaison comprenant une adresse topologiquement correcte d'un premier noeud mobile comme adresse d'intérêt et la première adresse d'origine comme adresse d'origine ; et
- utiliser (810) le premier agent d'origine dans un mode tunnel bidirectionnel pour une communication avec le premier noeud correspondant, avec les paramètres de communication établis à l'étape d'amorçage et la première adresse d'origine comme adresse d'origine ;
- **caractérisé en outre en ce que**, le premier agent d'origine localisé doit être situé plus près du premier noeud correspondant que du premier noeud mobile ;
- et l'étape de localisation du premier agent d'origine parmi ladite pluralité comprend l'étape suivante :
- demander à un serveur de nom de domaine une adresse d'agent d'origine, le nom de domaine étant constitué à partir d'au moins le nom de domaine du premier noeud correspondant pour trouver une adresse du premier agent d'origine.

20. Procédé selon la revendication 19, dans lequel l'étape d'amorçage avec le premier agent d'origine est exécutée par le premier noeud mobile.

21. Procédé selon la revendication 19, dans lequel l'étape d'amorçage avec le premier agent d'origine est exécutée par un noeud de serveur de proximité de la part du premier noeud mobile.

22. Procédé selon l'une quelconque des revendications 20 ou 21, dans lequel l'étape d'enregistrement de la position du premier noeud mobile avec le premier agent d'origine est exécutée par le premier noeud mobile.

23. Procédé selon l'une quelconque des revendications 19 à 21, dans lequel l'étape d'enregistrement de la position du premier noeud mobile avec le premier agent d'origine est exécutée par un noeud de serveur de proximité de la part du premier noeud mobile.

24. Procédé selon l'une quelconque des revendications 19 à 23, dans lequel l'étape de localisation du premier agent d'origine parmi ladite pluralité est exécutée par le premier noeud mobile.

25. Procédé selon l'une quelconque des revendications 19 à 23, dans lequel l'étape de localisation du premier agent d'origine parmi ladite pluralité est exécutée par un noeud de serveur de proximité de la part du premier noeud mobile.

26. Procédé selon l'une quelconque des revendications 19 à 25, dans lequel le premier agent d'origine est réutilisé dans des sessions de communication ultérieures avec des noeuds correspondants identiques ou différents dans le même domaine ou dans un domaine proche, en sautant les étapes de localisation et d'amorçage.

27. Noeud mobile (100) dans un système de réseaux à commutation de paquets comprenant une pluralité d'agents d'origine et au moins un noeud correspondant (102), le noeud mobile (100) étant configuré avec au moins une adresse de protocole Internet topologiquement correcte, le noeud mobile (100) comprenant :
- une application adaptée pour demander une communication avec un premier noeud correspondant (102) ;
- un moyen de localisation adapté pour localiser un premier agent d'origine (206) parmi ladite pluralité à proximité d'un chemin direct entre le noeud mobile (100) et le premier noeud correspondant (102) ;
- un moyen d'amorçage adapté pour amorcer avec le premier agent d'origine (206) pour obtenir une première adresse d'origine et d'autres paramètres de communication ;
- un moyen de transmission adapté pour envoyer un message de mise à jour de liaison comprenant une première adresse topologiquement correcte comme adresse d'intérêt et la première adresse d'origine comme adresse d'origine ; et
- un moyen de communication adapté pour utiliser le premier agent d'origine (206) en mode tunnel bidirectionnel pour une communication avec le premier noeud correspondant (102), avec les paramètres de communication et la première adresse d'origine comme adresse d'origine ;
- **caractérisé en ce que** le premier agent d'origine localisé doit être situé plus près du premier noeud correspondant que du premier noeud mobile ; et
- le moyen de localisation pour localiser le premier agent d'origine parmi ladite pluralité est également adapté pour :
- demander à un serveur de nom de domaine une adresse d'agent d'origine, le nom de domaine étant constitué à partir d'au moins le nom de domaine du premier noeud correspondant pour trouver une adresse du premier agent d'origine.

28. Noeud mobile selon la revendication 27, adapté pour exécuter les étapes du procédé selon l'une quelconque des revendications 19 et 25.

29. Système de réseaux à commutation de paquets pour le routage de paquets comprenant une pluralité d'agents d'origine, au moins un noeud mobile (100) et au moins un noeud correspondant (102), un premier noeud mobile étant configuré avec au moins une adresse de protocole Internet topologiquement correcte, le système comprenant :
- une application sur le premier noeud mobile (100) adaptée pour demander une communication avec un premier noeud correspondant (102) ;
- un moyen de localisation adapté pour localiser un premier agent d'origine (206) parmi ladite pluralité à proximité d'un chemin direct entre le premier noeud mobile (100) et le premier noeud correspondant (102) ;
- un moyen d'amorçage adapté pour amorcer avec le premier agent d'origine (206) afin d'obtenir une première adresse d'origine et d'autres paramètres de communication ;
- un moyen d'enregistrement adapté pour enregistrer la position du premier noeud mobile avec le premier agent d'origine (206) en envoyant un message de mise à jour de liaison comprenant une adresse d'intérêt topologiquement correcte d'un premier noeud mobile et la première adresse d'origine comme adresse d'origine ; et
- le premier agent d'origine (206) étant adapté pour être utilisé en mode tunnel bidirectionnel pour une communication avec le premier noeud correspondant (102) avec les paramètres de communication et la première adresse d'origine comme adresse d'origine ;
- et **caractérisé en ce que** le premier agent d'origine localisé doit être situé plus près du premier noeud correspondant que du premier noeud mobile ; et
- le moyen de localisation pour localiser le premier agent d'origine parmi ladite pluralité est également adapté pour demander à un serveur de nom de domaine une adresse d'agent d'origine, le nom de domaine étant constitué à partir d'au moins le nom de domaine du premier noeud correspondant pour trouver une adresse du premier agent d'origine.

30. Système selon la revendication 29 adapté pour exécuter les étapes du procédé selon l'une quelconque des revendications 19 et 25.

31. Support lisible par un ordinateur, stockant des instructions qui, lorsqu'elles sont exécutées par un processeur d'un noeud mobile dans un système de réseaux à commutation de paquets comprenant une pluralité d'agents d'origine et au moins un noeud correspondant, le noeud mobile étant configuré avec au moins une adresse de protocole Internet topologiquement correcte, font en sorte que le noeud mobile exécute les étapes suivantes :
- demander une communication avec un premier noeud correspondant par une application sur le premier noeud mobile ;
- localiser un premier agent d'origine parmi ladite pluralité à proximité d'un chemin direct entre le premier noeud mobile et le premier noeud correspondant ;
- amorcer avec le premier agent d'origine pour obtenir une première adresse d'origine et d'autres paramètres de communication ;
- enregistrer la position du premier noeud mobile avec le premier agent d'origine en envoyant un message de mise à jour de liaison comprenant une première adresse topologiquement correcte comme adresse d'intérêt et la première adresse d'origine comme adresse d'origine ; et
- utiliser le premier agent d'origine dans un mode de tunnel bidirectionnel pour une communication avec le premier noeud correspondant, avec les paramètres de communication établis à l'étape d'amorçage et la première adresse d'origine comme adresse d'origine ;
- **caractérisé en outre en ce que**, le premier agent d'origine localisé doit être situé plus près du premier noeud correspondant que du premier noeud mobile ; et
- l'étape de localisation du premier agent d'origine parmi ladite pluralité comprend l'étape suivante :
- demander à un serveur de nom de domaine une adresse d'agent d'origine, le nom de domaine étant constitué à partir d'au moins le nom de domaine du premier noeud correspondant pour trouver une adresse du premier agent d'origine.

32. Support lisible par ordinateur selon la revendication 31, stockant des instructions qui, lorsqu'elles sont exécutées par un processeur d'un noeud mobile dans un système de réseaux à commutation de paquets comprenant une pluralité d'agents d'origine et au moins un noeud correspondant, le noeud mobile étant configuré avec au moins une adresse de protocole Internet topologiquement correcte, font en sorte que le noeud mobile exécute les étapes du procédé selon l'une quelconque des revendications 19 et 25.

33. Noeud mobile dans un système de réseaux à commutation de paquets pour le routage de paquets comprenant une pluralité d'agents d'origine et au moins un noeud correspondant, le noeud mobile étant configuré avec au moins une adresse de protocole Internet topologiquement correcte et une première adresse d'origine, le noeud mobile comprenant :
- un moyen de réception adapté pour recevoir des paquets de données d'un premier noeud correspondant mis en tunnel sur le premier agent d'origine ;
- et **caractérisé en ce qu'**il comprend en outre :
- un moyen de localisation pour localiser un second agent d'origine parmi ladite pluralité à proximité d'un chemin direct entre le noeud mobile et le premier noeud correspondant ;
- un moyen d'amorçage adapté pour amorcer avec le second agent d'origine afin d'obtenir une seconde adresse d'origine et d'autres paramètres de communication ;
- un moyen de transmission adapté pour envoyer une première mise à jour de liaison comprenant l'adresse topologiquement correcte du noeud mobile comme adresse d'intérêt et la seconde adresse d'origine comme adresse d'origine pour enregistrer la position du noeud mobile avec le second agent d'origine ;
- le moyen de transmission étant en outre adapté pour envoyer un second message de mise à jour de liaison comprenant la seconde adresse d'origine comme adresse d'intérêt et la première adresse comme adresse d'origine pour enregistrer la position du noeud mobile avec le premier noeud correspondant ;
- le moyen de transmission étant en outre adapté pour envoyer un premier message d'initialisation d'essai d'intérêt au premier noeud correspondant via un tunnel bidirectionnel au second agent d'origine, avec une adresse source dans l'en-tête du protocole Internet du premier message d'initialisation d'essai d'intérêt fixée comme étant la seconde adresse d'origine ;
- le moyen de réception étant en outre adapté pour recevoir un message d'essai d'intérêt du premier noeud correspondant via le tunnel bidirectionnel au second agent d'origine ; et
- un moyen de communication adapté pour utiliser un mode d'optimisation de routage via le tunnel bidirectionnel au second agent d'origine pour une communication avec le premier noeud correspondant avec les paramètres de communication en envoyant des paquets de données destinés au premier noeud correspondant via le tunnel bidirectionnel au second agent d'origine, les paquets de données dans le tunnel comprenant la première adresse d'origine dans une option d'adresse d'origine, la seconde adresse d'origine comme adresse source dans un en-tête de protocole Internet et la première adresse du premier noeud correspondant comme adresse de destination dans l'en-tête du protocole Internet.

34. Noeud mobile selon la revendication 33, adapté pour mettre en oeuvre les étapes du procédé selon l'une quelconque des revendications 12 à 18.

35. Système de réseaux à commutation de paquets pour le routage de paquets comprenant une pluralité d'agents d'origine, au moins un noeud mobile et au moins un noeud correspondant, un premier noeud mobile étant configuré avec au moins une adresse de protocole Internet topologiquement correcte et une première adresse d'origine, le système comprenant :
- une application sur un premier noeud correspondant adaptée pour démarrer une session de communication avec le premier noeud mobile en envoyant des paquets de données à la première adresse d'origine du premier noeud mobile, la première adresse d'origine étant enregistrée au niveau du premier agent d'origine ;
- le premier noeud mobile étant adapté pour recevoir des paquets de données du premier noeud correspondant mis en tunnel sur le premier agent d'origine ;
- et **caractérisé en ce qu'**il comprend en outre :
- un moyen de localisation pour localiser un second agent d'origine parmi ladite pluralité à proximité d'un chemin direct entre le premier noeud mobile et le premier noeud correspondant ;
- un moyen d'amorçage adapté pour amorcer avec le second agent d'origine afin d'obtenir une seconde adresse d'origine et d'autres paramètres de communication ;
- le premier noeud mobile étant adapté pour envoyer une première mise à jour de liaison comprenant l'adresse topologiquement correcte du premier noeud mobile comme adresse d'intérêt et la seconde adresse d'origine comme adresse d'origine pour enregistrer la position du premier noeud mobile avec le second agent d'origine ;
- le premier noeud mobile étant en outre adapté pour envoyer un second message de mise à jour de liaison comprenant la seconde adresse d'origine comme adresse d'intérêt et la première adresse comme adresse d'origine pour enregistrer la position du premier noeud mobile avec le premier noeud correspondant ;
- le premier noeud mobile étant en outre adapté pour envoyer un premier message d'initialisation d'essai d'intérêt au premier noeud correspondant via un tunnel bidirectionnel au second agent d'origine, avec une adresse source dans l'en-tête du protocole Internet du premier message d'initialisation d'essai d'intérêt fixée comme étant la seconde adresse d'origine ;
- le premier noeud mobile étant en outre adapté pour recevoir un message d'essai d'intérêt du premier noeud correspondant via le tunnel bidirectionnel au second agent d'origine ; et
- le premier noeud mobile étant en outre adapté pour utiliser un mode d'optimisation de routage via le tunnel bidirectionnel au second agent d'origine pour une communication avec le premier noeud correspondant avec les paramètres de communication en envoyant des paquets de données destinés au premier noeud correspondant via le tunnel bidirectionnel au second agent d'origine, les paquets de données dans le tunnel comprenant la première adresse d'origine dans une option d'adresse d'origine, la seconde adresse d'origine comme adresse source dans un en-tête de protocole Internet et la première adresse du premier noeud correspondant comme adresse de destination dans l'en-tête du protocole Internet.

36. Système selon la revendication 35, adapté pour exécuter les étapes du procédé selon l'une quelconque des revendications 12 à 18.

37. Support lisible par un ordinateur, stockant des instructions qui, lorsqu'elles sont exécutées par un processeur d'un noeud mobile dans un système de réseaux à commutation de paquets pour le routage de paquets comprenant une pluralité d'agents d'origine et au moins un noeud correspondant, le noeud mobile étant configuré avec au moins une adresse de protocole Internet topologiquement correcte et une première adresse d'origine, font en sorte que le noeud mobile exécute les étapes suivantes :
- recevoir des paquets de données d'un premier noeud correspondant mis en tunnel sur le premier agent d'origine ;
- et **caractérisé en outre par** l'exécution des étapes consistant à :
- localiser un second agent d'origine parmi ladite pluralité à proximité d'un chemin direct entre le noeud mobile et le premier noeud correspondant ;
- amorcer avec le second agent d'origine pour obtenir une seconde adresse d'origine et d'autres paramètres de communication ;
- enregistrer la position du noeud mobile avec le second agent d'origine en envoyant une première mise à jour de liaison comprenant l'adresse topologiquement correcte du noeud mobile comme adresse d'intérêt et la seconde adresse d'origine comme adresse d'origine ;
- enregistrer la position du noeud mobile avec le premier noeud correspondant en envoyant un second message de mise à jour de liaison comprenant la seconde adresse d'origine comme adresse d'intérêt et la première adresse d'origine comme adresse d'origine ;
- envoyer un premier message d'initialisation d'essai d'intérêt au premier noeud correspondant via un tunnel bidirectionnel au second agent d'origine, avec une adresse source dans l'en-tête du protocole Internet du premier message d'initialisation d'essai d'intérêt fixée comme étant la seconde adresse d'origine ;
- recevoir un message d'essai d'intérêt du premier noeud correspondant via le tunnel bidirectionnel au second agent d'origine ; et
- utiliser le mode d'optimisation de routage via le tunnel bidirectionnel au second agent d'origine pour une communication entre le premier noeud mobile et le premier noeud correspondant avec les paramètres de communication établis à l'étape d'amorçage en envoyant par le premier noeud mobile des paquets de données destinés au premier noeud correspondant via le tunnel bidirectionnel au second agent d'origine, les paquets de données dans le tunnel comprenant la première adresse d'origine dans une option d'adresse d'origine, la seconde adresse d'origine comme adresse source dans un en-tête de protocole Internet et la première adresse du premier noeud correspondant comme adresse de destination dans l'en-tête du protocole Internet.

38. Support lisible par ordinateur selon la revendication 37, stockant des instructions qui, lorsqu'elles sont exécutées par un processeur d'un noeud mobile dans un système de réseaux à commutation de paquets pour le routage de paquets comprenant une pluralité d'agents d'origine et au moins un noeud correspondant, le noeud mobile étant configuré avec au moins une adresse de protocole Internet topologiquement correcte et une première adresse d'origine, font en sorte que le noeud mobile exécute les étapes du procédé selon l'une quelconque des revendications 12 à 18.
